(19) Europäisches Patentamt
European Patent Office
Office européen des brevets

(11) **EP 2 947 640 B1**

(12) **EUROPEAN PATENT SPECIFICATION**

(45) Date of publication and mention of the grant of the patent:
**02.08.2017 Bulletin 2017/31**

(21) Application number: **13871627.9**

(22) Date of filing: **01.11.2013**

(51) Int Cl.:
*H04L 9/08* (2006.01)     *H04L 29/06* (2006.01)
*G09C 1/00* (2006.01)     *G06F 21/72* (2013.01)

(86) International application number:
**PCT/JP2013/079736**

(87) International publication number:
**WO 2014/112182 (24.07.2014 Gazette 2014/30)**

(54) **DATA DECRYPTION DEVICE, ATTRIBUTE-BASED ENCRYPTION SYSTEM, RANDOM NUMBER ELEMENT REMOVING DEVICE, DATA DECRYPTION METHOD, AND DATA DECRYPTION PROGRAMM.**

DATENENTSCHLÜSSELUNGSEINRICHTUNG, ATTRIBUTBASIERTES VERSCHLÜSSELUNGSSYSTEM, ZUFALLSZAHLELEMENT-ENTFERNUNGSEINRICHTUNG, DATENENTSCHLÜSSELUNGSVERFAHREN, DATENENTSCHLÜSSELUNGSPROGRAMM.

DISPOSITIF DE DECHIFFREMENT DE DONNEES, SYSTEME DE CHIFFREMENT A BASE D'ATTRIBUTS, DISPOSITIF DE SUPPRESSION D'ELEMENT DE NOMBRE ALEATOIRE, PROCEDE DE DECHIFFREMENT DE DONNEES, PROGRAMME DE DECHIFFREMENT DE DONNEES.

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2013 JP 2013007169**

(43) Date of publication of application:
**25.11.2015 Bulletin 2015/48**

(73) Proprietor: **Mitsubishi Electric Corporation**
**Tokyo 100-8310 (JP)**

(72) Inventors:
• **MATSUDA, Nori**
**Tokyo 100-8310 (JP)**
• **HATTORI, Mitsuhiro**
**Tokyo 100-8310 (JP)**
• **ICHIKAWA, Sachihiro**
**Tokyo 100-8310 (JP)**
• **ITO, Takashi**
**Tokyo 100-8310 (JP)**
• **HIRANO, Takato**
**Tokyo 100-8310 (JP)**

(74) Representative: **Pfenning, Meinig & Partner mbB**
**Patent- und Rechtsanwälte**
**Theresienhöhe 11a**
**80339 München (DE)**

(56) References cited:
**WO-A1-2011/086687     WO-A1-2012/011564**
**US-A1- 2012 300 936**

• **JIN LI ET AL: "Secure Outsourced Attribute-based Encryption", INTERNATIONAL ASSOCIATION FOR CRYPTOLOGIC RESEARCH,, vol. 20130331:042334, 8 November 2012 (2012-11-08), pages 1-12, XP061006939, [retrieved on 2012-11-08]**
• **TSUKASA ISHIGURO: 'Improvement of Attribute-based Encryption in Mobile Cloud Computing' CSS2011 COMPUTER SECURITY SYMPOSIUM 2011 RONBUNSHU, IPSJ SYMPOSIUM SERIES vol. 2011, no. 3, 12 October 2011, pages 421 - 426, XP055263608**
• **KATSUHISA KAWAGUCHI: 'Zokusei Base Ango to sono Oyo' 2009 NEN SYMPOSIUM ON CRYPTOGRAPHY AND INFORMATION SECURITY SCIS2009 20 January 2009, pages 1 - 6, XP008179832**

**Description**

**Technical Field**

The present invention relates to a data decryption device, an attribute-based encryption system, a random number element removing device, a randomized secret key generation device, a data decryption method, and a data decryption program each employing an attribute-based encryption scheme, for example.

**Background Art**

In recent years, new encryption such as an attribute-based encryption or functional encryption has been proposed which is an integration of an access control function and an encryption function (for example, Non-Patent Literature 1 and Non-Patent Literature 2).

According to this new encryption, data is encrypted by specifying the attribute of a decryption-permitted user, so that only a user having the specified attribute can decrypt the encrypted data.

In the attribute-based encryption scheme, there are a key generation server and a user who encrypts or decrypts data.

The key generation server manages the attribute of the user. Furthermore, in accordance with the user's request, the key generation server generates a secret key in which the attribute of the user is embedded, and sends the generated secret key to the user.

For example, the key generation server generates, for Mr./Ms Tanaka belonging to B section, A department, a secret key in which are embedded three attributes: A department, B section, Tanaka.

A user who decrypts data specifies the condition of the attribute that the decryption-permitted user should have, by a logical expression using a logical operator such as AND or OR.

For example, if the decryption-permitted user is a person belonging to A department, the user who encrypts the data specifies a conditional expression "A department". If the decryption-permitted user is a person belonging to A department or B department, the user who encrypts the data specifies a conditional expression "A department OR B department".

In this case, Tanaka belonging to A department can decrypt data no matter which conditional expression might have been used to encrypt the data. This is because the attribute "A department" of Tanaka matches either of the conditional expression "A department" and the conditional expression "A department OR B department".

Mr./Ms Sato belonging to B department can decrypt data encrypted using the conditional expression "A department OR B department" but cannot decrypt data encrypted using the conditional expression "A department". This is because the attribute "B department" of Sato matches the conditional expression "A department OR B department" but does not match the conditional expression "A department".

Mr./Ms Suzuki belonging to C department cannot decrypt data no matter which conditional expression might have been used to encrypt the data. This is because the attribute "C department" of Suzuki matches neither the conditional expression "A department" nor the conditional expression "A department OR B department".

Such attribute-based encryption is an intelligent encryption and accordingly the decrypting process for it takes time, which is disadvantageous.

This is because the decrypting process includes execution of a decoding process of decoding secret sharing for preventing falsification of the conditional expression, as well as pairing operation which is a complicated computation.

Therefore, it is difficult to carry out the decrypting process using terminal equipment, such as built-in equipment or an IC card, which has a low processing speed and a small memory capacity.

In view of this, a decryption delegation scheme of delegating the decrypting process to another device has been proposed.

For example, Non-Patent Literature 3 proposes adding the mechanism of decryption delegation to the algorithm (see Non-Patent Literature 2) of the attribute-based encryption, so that secret sharing decoding or a pairing operation is executed by a proxy, and only random number removal which is done in the final stage of the decrypting process is executed by terminal equipment such as built-in equipment or an IC card. Then, even when encrypted data is to be decrypted using terminal equipment having a low computing capability, the decrypting process can be completed within a short period of time.

With the scheme proposed by Non-Patent Literature 3, however, the security is ensured only in a situation where the attacker is limited (Selective-secure), while the security cannot be ensured in a situation where the attacker is not limited (Adaptive-secure).

**Citation List**

**Non-Patent Literature**

Non-Patent Literature 1: T.Okamoto, K.Takashima, "Fully secure functional encryption with general relations from the decisional linear assumption", CRYPTO,2010

Non-Patent Literature 2: B.Waters, "Ciphertext-policy attribute-based encryption: an expressive, efficient, and provably secure realization", PKC, 2011

Non-Patent Literature 3: M.Green, S.Hohenberger, B.Waters, "Outsourcing the Decryption of ABE Ciphertexts", Proceedings of the 20th USENIX conference on Security, 2011

JIN LI ET AL.: "Secure Outsourced Attribute-based Encryption", INTERNATIONAL ASSOCIATION FOR CRYPTOLOGIC RESEARCH, vol. 20130331:042334, 8 November 2012, pages 1-12, XP061006939, discloses offloads all access policy and attribute related operations in the key-issuing process or decryption to a Key Generation Service Provider (KGSP) and a Decryption Service Provider (DSP), respectively, leaving only a constant number of simple operations for the AAs and eligible users to perform locally.

US 2012/300936A1 discloses that Functional encryption (FE) ciphertext is transformed into partially-decrypted (PD) ciphertext. The FE ciphertext can be an attribute-based encryption ciphertext. The transformation can be performed with a transformation key generated by an authority with a master key or by a user with a decryption key.

**Summary of Invention**

**Technical Problem**

The object of the present invention is to enhance the security of encrypted data by dividing the decrypting process of the attribute-based encryption scheme into a plurality of stages and executing the decrypting process, for example.

**Solution to Problem**

A data decryption device according to the present invention is defined in the appended independent claim, and includes:

a common key partly decrypting part that generates a randomized mask common key including a random number element, by performing a decrypting process for an encrypted common key being a common key encrypted using an attribute conditional expression including an attribute value, using a randomized secret key which is obtained by including the random number element into a user secret key generated in accordance with an attribute-based encryption scheme using the attribute value representing an attribute;

a mask common key acquiring part that acquires a mask common key which is obtained by removing the random number element from the randomized mask common key generated by the common key partly decrypting part;

a mask removing part that generates the common key using the mask common key acquired by the mask common key acquiring part; and

a data decrypting part that decrypts target data having been encrypted using the common key, using the common key generated by the mask removing part.

**Advantageous Effects of Invention**

According to the present invention, the security of the encrypted data can be enhanced by dividing the decrypting process of the attribute-based encryption scheme into a plurality of stages and executing the decrypting process, for example.

**Brief Description of Drawings**

Fig. 1 is a configuration diagram of an attribute-based encryption system 100 according to Embodiment 1.

Fig. 2 is a functional configuration diagram of a key generation server 200 according to Embodiment 1.

Fig. 3 is a functional configuration diagram of an access terminal 300 according to Embodiment 1.

Fig. 4 is a functional configuration diagram of an IC card 400 according to Embodiment 1.

Fig. 5 is a flowchart illustrating the process outline of the attribute-based encryption system 100 according to Embodiment 1.

Fig. 6 is a flowchart illustrating the initial setting process (S100) according to Embodiment 1.

Fig. 7 illustrates an example of a user attribute table 291 according to Embodiment 1.

Fig. 8 is a flowchart illustrating the r-user secret key issuing process (S200) according to Embodiment 1.

Fig. 9 is a flowchart illustrating the r-user secret key generating process (S220) according to Embodiment 1.

Fig. 10 is a flowchart illustrating the data encrypting process (S300) according to Embodiment 1.

Fig. 11 is a flowchart illustrating the KEM key encrypting process (S340) according to Embodiment 1.

Fig. 12 is a flowchart illustrating the data decrypting process (S400) according to Embodiment 1.

Fig 13 is a flowchart illustrating the random number removing process (S450) according to Embodiment 1.

Fig. 14 illustrates an example of the hardware resources of the access terminal 300 according to Embodiment 1.

Fig. 15 is a functional configuration diagram of a key generation server 200 according to Embodiment 2.

Fig. 16 is a functional configuration diagram of an IC card 400 according to Embodiment 2.

Fig. 17 is a flowchart showing the process outline of an attribute-based encryption system 100 according to Embodiment 2.

Fig. 18 is a flowchart illustrating the user secret key issuing process (S200B) according to Embodiment 2.

Fig. 19 is a flowchart illustrating the user secret key generating process (S220B) according to Embodiment 2.

Fig. 20 is a flowchart illustrating the data decrypting process (S400B) according to Embodiment 2.

Fig. 21 is a flowchart illustrating the r-user secret key acquiring process (S420B) according to Embodiment 2.

Fig. 22 is a functional configuration diagram of a key generation server 200 according to Embodiment 3.

Fig. 23 is a functional configuration diagram of an access terminal 300 according to Embodiment 3.

Fig. 24 is a flowchart illustrating the process outline of an attribute-based encryption system 100 according to Embodiment 3.

Fig. 25 is a flowchart illustrating the r-user secret key generating process (S200C) according to Embodiment 3.

Fig. 26 is a flowchart illustrating the data decrypting process (S400C) according to Embodiment 3.

## Description of Embodiments

Embodiment 1.

An embodiment will be described in which part of the decrypting process of an attribute-based encryption system is delegated to an IC card.

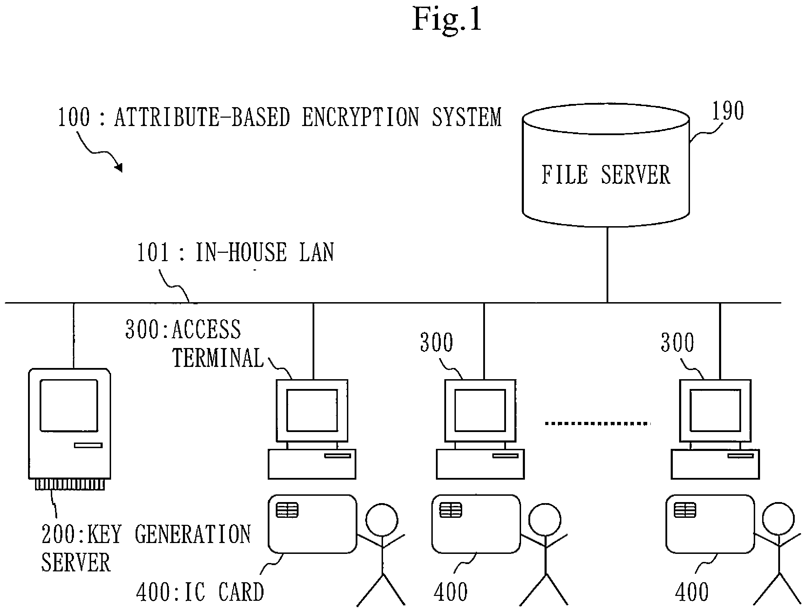

Fig. 1 is a configuration diagram of an attribute-based encryption system 100 according to Embodiment 1.

The configuration of the attribute-based encryption system 100 according to Embodiment 1 will be described with reference to Fig. 1.

The attribute-based encryption system 100 is a system that encrypts or decrypts data by an attribute-based encryption scheme (see Non-Patent Literature 1).

The attribute-based encryption scheme is an encryption scheme according to which data is encrypted using a conditional expression concerning the attribute of a user who is given an access authority for accessing the data, so that only a user having an attribute that satisfies the conditional expression can decrypt the data. The attribute-based encryption scheme is also called "functional encryption scheme".

The attribute-based encryption system 100 includes one key generation server 200 (an example of a randomized secret key generation device), at least one access terminal 300 (an example of a data decryption device), an IC card 400 (an example of a random number element removing device) of each user, and one file server 190. IC stands for integrated circuit.

Note that the attribute-based encryption system 100 may include another constituent element. Each constituent element may be provided as one element or a plurality of elements.

The key generation server 200, access terminal 300, and file server 190 are connected to an in-house local area network (to be referred to as in-house LAN 101 hereinafter). The in-house LAN 101 may be a complicated communication route extending via a router, a private line, or the like.

Such constituent elements may be connected to a network (for example, the internet) other than the in-house LAN 101.

The key generation server 200 is a device that generates a public parameter to be used for encrypting/decrypting data, a user secret key randomized using a random number, and a value (to be referred to as mask value hereinafter) concerning the random number to be used for randomizing the user secret key. The device may also be called a computer.

The access terminal 300 is a device (for example, a personal computer) that encrypts the data using the public parameter 212 generated by the key generation server 200. Also, the access terminal 300 is a device that decrypts the encrypted data by cooperation with the IC card 400.

The IC card 400 is a device that stores the user secret key and the mask value generated by the key generation server 200. Also, the IC card 400 is a device that decrypts the encrypted data by cooperation with the access terminal 300.

The file server 190 is a device that stores the encrypted data. For example, the file server 190 is a marketed server with Windows OS (Windows is a registered trademark).

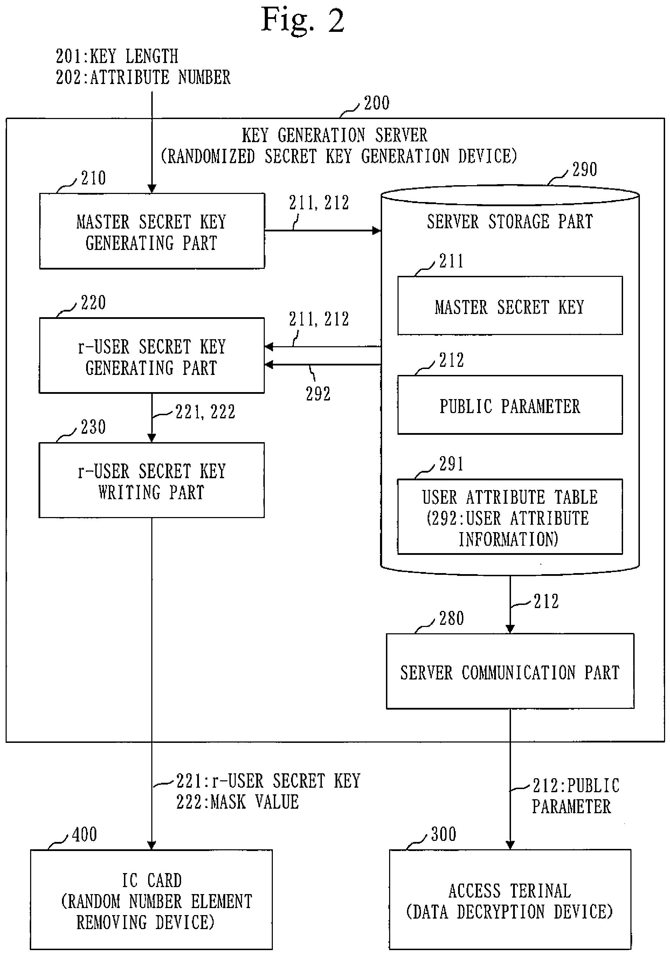

Fig. 2 is a functional configuration diagram of the key generation server 200 according to Embodiment 1.

The functional configuration of the key generation server 200 according to Embodiment 1 will be described with reference to Fig. 2.

The key generation server 200 includes a master secret key generating part 210, an r-user secret key generating part 220, an r-user secret key writing part 230, a server communication part 280, and a server storage part 290.

The master secret key generating part 210 generates a master secret key 211 and the public parameter 212, using a key length 201 set in the public parameter 212 and the number of types of the user's attributes (to be referred to as attribute number 202 hereinafter).

The r-user secret key generating part 220 generates an r-user secret key 221 and a mask value 222, using the r-user secret key 221, the public parameter 212, and information (to be referred to as user attribute information 292 hereinafter) including attribute values representing the user's attributes. The r-user secret key 221 is a user secret key randomized using a random number. The mask value 222 is a value concerning the random number used for randomizing the user secret key.

The r-user secret key writing part 230 writes the r-user secret key 221 and the mask value 222 to the IC card 400.

The server communication part 280 communicates data to be used by the key generation server 200.

For example, the server communication part 280 transmits the public parameter 212 to the access terminal 300.

The server storage part 290 stores the data to be used by the key generation server 200.

For example, the server storage part 290 stores the master secret key 211, the public parameter 212, and a user attribute table 291.

The user attribute table 291 is a table that includes the user attribute information 292 to correspond to each user.

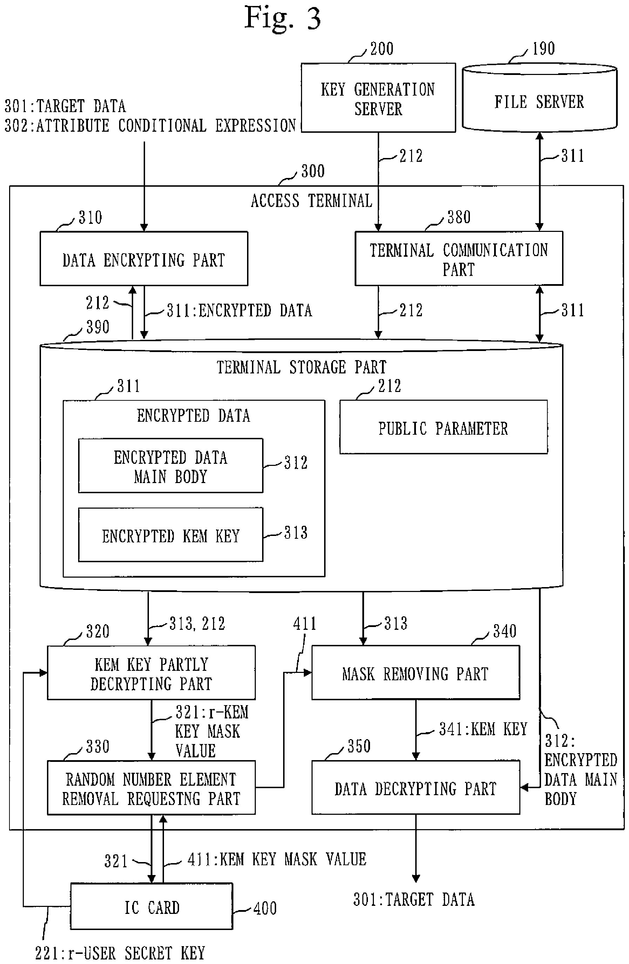

Fig. 3 is a functional configuration diagram of the access terminal 300 according to Embodiment 1.

The functional configuration of the access terminal 300 according to Embodiment 1 will be described with reference to Fig. 3.

The access terminal 300 (an example of the data decryption device) includes a data encrypting part 310, a KEM key partly decrypting part 320 (an example of a common key partly decrypting part), a random number element removal requesting part 330 (an example of a mask common key acquiring part), a mask removing part 340, a data decrypting part 350, a terminal communication part 380, and a terminal storage part 390.

The data encrypting part 310 encrypts target data 301 being a target to be encrypted, using a conditional expression (to be referred to as attribute conditional expression 302 hereinafter) concerning the attribute of the user who is given an access authority to access the data, and the public parameter 212, thereby generating encrypted data 311. The encrypted data 311 includes an encrypted data main body 312 being the target data 301 encrypted, and an encrypted KEM key 313 being a common key (to be referred to as KEM key 341 hereinafter) encrypted, which is used for encrypting the target data 301. KEM stands for Key Encapsulation Mechanism.

The KEM key partly decrypting part 320 partly decrypts the encrypted KEM key 313 using the public parameter 212 and the r-user secret key 221. The encrypted KEM key 313 partly decrypted will be referred to as "r-KEM key mask value 321" hereinafter.

The random number element removal requesting part 330 requests the IC card 400 to remove a random number element included in the r-KEM key mask value 321, and acquires the r-KEM key mask value 321 from which the random number element has been removed (to be referred to as KEM key mask value 411 hereinafter), from the IC card 400.

The mask removing part 340 calculates the KEM key 341 using the KEM key mask value 411.

The data decrypting part 350 decrypts the encrypted data main body 312 into the target data 301, using the KEM key 341.

The terminal communication part 380 communicates the data to be used by the access terminal 300.

For example, the terminal communication part 380 receives the public parameter 212 from the key generation server 200 and transmits the encrypted data 311 to the file server 190. The terminal communication part 380 also receives the encrypted data 311 from the file server 190.

The terminal storage part 390 stores the data to be used by the access terminal 300.

For example, the terminal storage part 390 stores the encrypted data 311 and the public parameter 212.

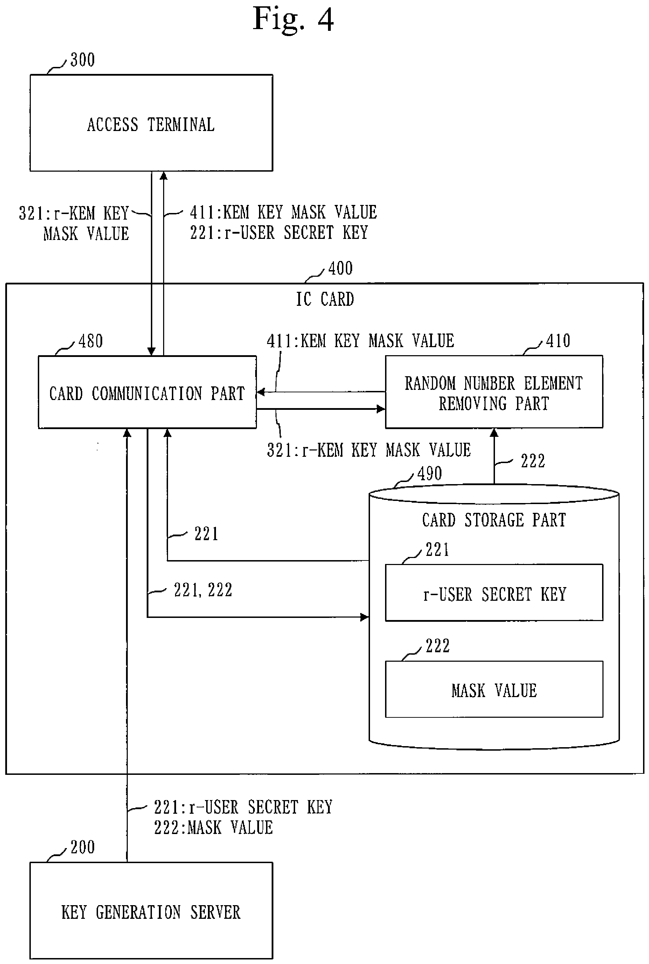

Fig. 4 is a functional configuration diagram of the IC card 400 according to Embodiment 1.

The functional configuration of the IC card 400 according to Embodiment 1 will be described with reference to Fig. 4.

The IC card 400 includes a random number element removing part 410, a card communication part 480, and a card storage part 490.

The random number element removing part 410 removes the random number element from the r-KEM key mask value 321 using the mask value 222, thereby calculating the KEM key mask value 411.

The card communication part 480 communicates the data to be used by the IC card 400.

For example, the card communication part 480 receives the r-user secret key 221 and the mask value 222 from the key generation server 200. Also, the card communication part 480 receives the r-KEM key mask value 321 from the access terminal 300 and transmits the KEM key mask value 411 and the r-user secret key 221 to the access terminal 300.

The card storage part 490 stores the data to be used by the IC card 400.

For example, the card storage part 490 stores the r-user secret key 221 and the mask value 222.

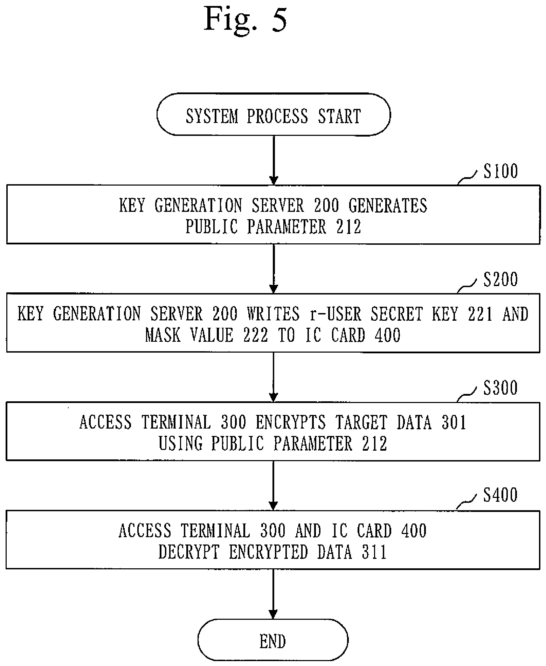

Fig. 5 is a flowchart illustrating the process outline of the attribute-based encryption system 100 according to Embodiment 1.

The process outline of the attribute-based encryption system 100 according to Embodiment 1 will be described with reference to Fig. 5.

In S100, the key generation server 200 generates the public parameter 212.

The initial setting process (S100) in detail will be described separately.

After S100, the process proceeds to S200.

In S200, the key generation server 200 writes the r-user secret key 221 and the mask value 222 to the IC card 400.

The user secret key issuing process (S200) in detail will be described separately.

After S200, the process proceeds to S300.

In S300, the access terminal 300 encrypts the target data 301 using the public parameter 212.

The data encrypting process (S300) in detail will be described separately.

After S300, the process proceeds to S400.

In S400, the access terminal 300 and the IC card 400 decrypt the encrypted data 311.

The data decrypting process (S400) in detail will be described separately.

After S400, the process of the attribute-based encryption system 100 ends.

The processes (S100 to S400 of Fig. 5) in detail of the attribute-based encryption system 100 will now be described.

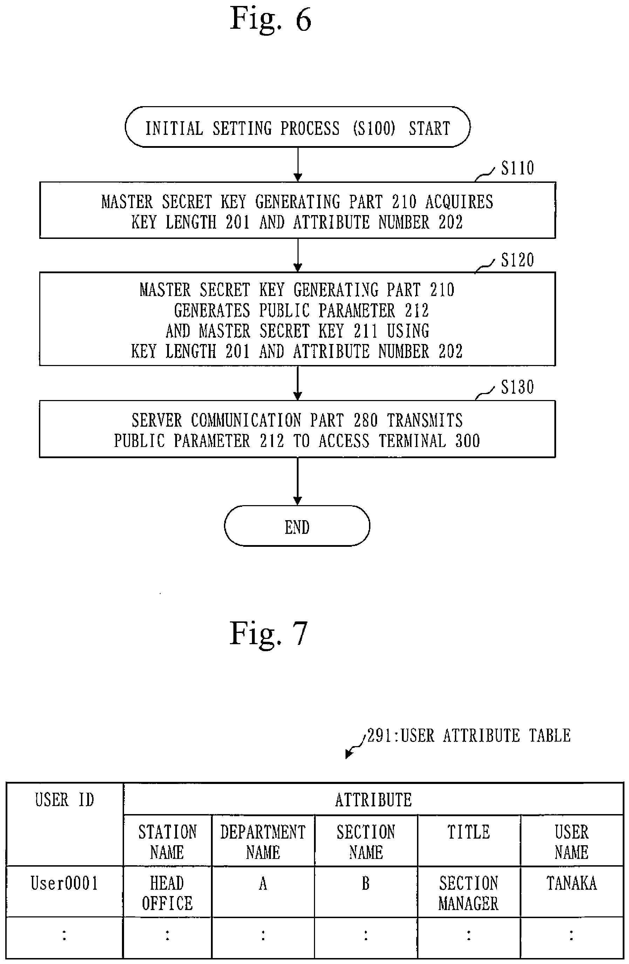

Fig. 6 is a flowchart illustrating the initial setting process (S100) according to Embodiment 1.

The initial setting process (S100) according to Embodiment 1 will be described with reference to Fig. 6.

In S110, an administrator inputs the key length 201 being a parameter concerning the strength of the encryption and the attribute number 202 indicating the number of types of the user's attributes, to the key generation server 200.

For example, the administrator inputs a bit number such as 128 bits or 256 bits, as the key length 201.

For example, the administrator inputs "5" indicating the number of types of the attributes included in the user attribute table 291 (see Fig. 7), as the attribute number 202.

The master secret key generating part 210 acquires the key length 201 and attribute number 202 inputted to the key generation server 200.

After S110, the process proceeds to S120.

Fig. 7 illustrates an example of the user attribute table 291 according to Embodiment 1.

The user attribute table 291 according to Embodiment 1 will be described with reference to Fig. 7.

The user attribute table 291 is data, for each user, including the attribute values representing the user's attributes.

For example, the user attribute table 291 relates the user ID, the station name, the department name, the section name, the title, and the user name to each other.

The user ID indicates the identifier that identifies the user.

The station name indicates the name of the station where the user works.

The department name indicates the name of the department to which the user belongs.

The section name indicates the name of the section to which the user belongs.

The tile indicates the name of the title of the user.

The user name is the name of the user.

These fields "station name, department name, section name, title, and user name" are examples of the types of the user's attributes. The values set in these fields are examples of the attribute value.

For example, the attribute values of the user identified by the user ID "User0001" are "head office, A department, B section, section manager, Tanaka".

Note that the administrator generates the user attribute table 291 as shown in Fig. 7 and stores the user attribute table 291 generated, to the key generation server 200 in advance.

The user attribute table 291 may be generated and stored before, after, or during the initial setting process (S100).

The attribute values set in the user attribute table 291 may be the current attribute values of the user, the past attribute values of the user, or both the current and past attribute values.

Returning to Fig. 6, description on the initial setting process (S100) will be continued.

In S120, the master secret key generating part 210 executes the master secret key generating algorithm (called setup algorithm as well) of the attribute-based encryption scheme using the key length 201 and the attribute number 202, thereby generating the public parameter 212 and the master secret key 211.

The master secret key generating part 210 also stores the public parameter 212 and the master secret key 211 to the server storage part 290.

Formulae (1-1) to (1-8) for generating the public parameter pk and the master secret key sk are indicated below.

The public parameter pk can be expressed by formula (1-7). The master secret key sk can be expressed by formula (1-8).

The meanings of the symbols employed in the following formulae are as follows. Note that "^" signifies a superscript and "_" signifies a subscript (the same applies hereinafter). For example, "1^λ" signifies "$1^\lambda$", and "n_1" signifies "$n_1$".

"pk" represents the public parameter 212.

"sk" represents the master secret key 211.

"1^λ" represents the key length 201.

"d" represents the attribute number 202.

"param" represents the parameter of an elliptic curve.

"g_ob" represents an algorithm that calculates the set of pairs of B_t and B_t^*.

"R←" (a symbol in which a character R is added above an arrow) signifies acquiring a value randomly.

For other symbols, refer to chapter 7.1 of the Non-Patent Literature 1.

[Formula 1]

$$\vec{n} := (d; n_1, \ldots, n_d) \qquad \text{formula}(1-1)$$

$$\left( param_{\vec{n}}, \{B_t, B_t^*\}_{t=0,\ldots,d} \right) \xleftarrow{R} g_{ob}\left(1^\lambda, \vec{n}\right) \qquad \text{formula }(1-2)$$

$$\hat{B}_0 := \left(b_{0,1}, b_{0,3}, b_{0,5}\right) \qquad \text{formula }(1-3)$$

$$\hat{B}_t := \left(b_{t,1}, \ldots, b_{t,n_t}, b_{t,3n_t+1}\right) \text{ for } t = 1, \ldots, d \qquad \text{formula }(1-4)$$

$$\hat{B}_0^* := \left(b_{0,1}^*, b_{0,3}^*, b_{0,4}^*\right) \qquad \text{formula }(1-5)$$

$$\hat{B}_t^* := \left(b_{t,1}^*, \ldots, b_{t,n_t}^*, b_{t,2n_t+1}^*, \ldots, b_{t,3n_t}^*\right) \text{ for } t = 1, \ldots, d \qquad \text{formula }(1-6)$$

$$pk := \left(1^\lambda, param_{\vec{n}}, \{\hat{B}_t\}_{t=0,\ldots,d}\right) \qquad \text{formula }(1-7)$$

$$sk := \{\hat{B}_t^*\}_{t=0,\ldots,d} \qquad \text{formula }(1-8)$$

The above formulae (1-1) to (1-8) are the same as the formulae indicated in Chapter 7.1 of Non-Patent Literature 1.

After S120, the process proceeds to S130.

In S130, the server communication part 280 transmits the public parameter 212 to each access terminal 300.

Each access terminal 300 receives the public parameter 212 and stores the received public parameter 212 to the terminal storage part 390.

Each access terminal 300 may acquire the public parameter 212 by a method other than receiving the public parameter 212 from the server communication part 280.

Each access terminal 300 may acquire the public parameter 212 at a timing other than S130.

After S130, the initial setting process (S100) ends.

The following description refers to a case where the values of n_1 to n_d in the above formulae (1-1) to (1-8) are "2".

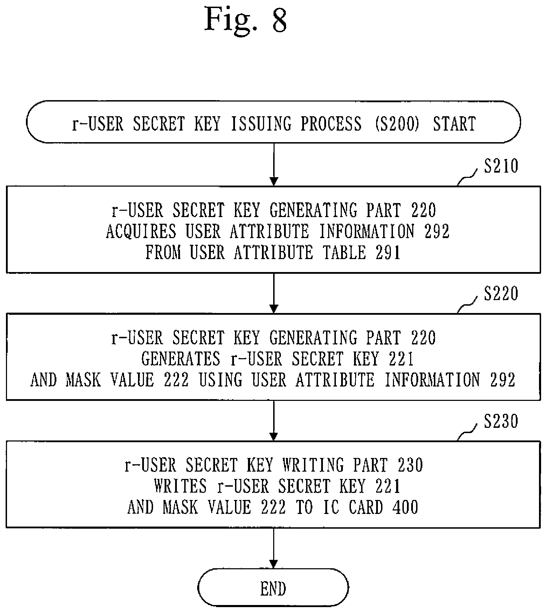

Fig. 8 is a flowchart illustrating the r-user secret key issuing process (S200) according to Embodiment 1.

The r-user secret key issuing process (S200) according to Embodiment 1 will be described with reference to Fig. 8.

In S210, the administrator enters the user ID that identifies the user to the key generation server 200. For example, the administrator enters a user ID "User0001".

The r-user secret key generating part 220 acquires the user ID entered to the key generation server 200. For example, the r-user secret key generating part 220 acquires the user ID "User0001".

The r-user secret key generating part 220 acquires attribute values associated with the acquired user ID from the user attribution table 291 (see Fig. 7). For example, the r-user secret key generating part 220 acquires attribute values "head office", "A department", "B section", "section manager", and "Tanaka" associated with the user ID "User0001".

Information that indicates attribute values acquired from the user attribute table 291 will be referred to as the user attribute information 292.

After S210, the process proceeds to S220.

In S220, the r-user secret key generating part 220 generates the r-user secret key 221 and the mask value 222 using the user attribute information 292.

The r-user secret key generating process (S220) will be described separately.

After S220, the process proceeds to S230.

In S230, the administrator connects a card reader/writer (to be noted as card R/W hereinafter) to the access terminal 300, and the IC card 400 for the user identified by the user ID entered in S210, to the card R/W.

The r-user secret key writing part 230 writes the r-user secret key 221 and the mask value 222 to the IC card 400 via the card R/W.

The administrator distributes the IC card 400 to the user identified by the user ID entered in S210.

After S230, the user secret key issuing process (S200) ends.

The user secret key issuing process (S200) is executed when issuing the IC card 400 to the user, or when the user attribute changes.

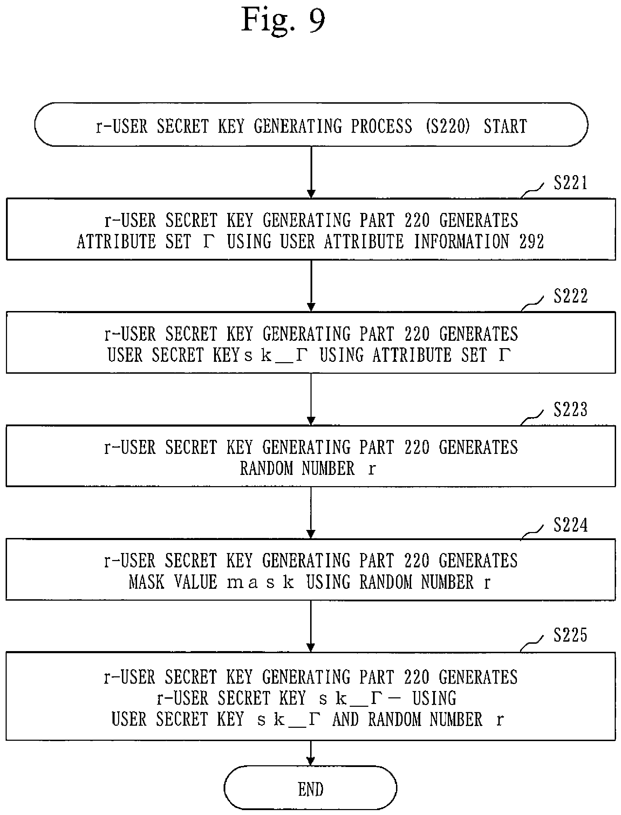

Fig. 9 is a flowchart illustrating the r-user secret key generating process (S220) according to Embodiment 1.

The r-user secret key generating process (S220) according to Embodiment 1 will be described with reference to Fig. 9.

In S221, the r-user secret key generating part 220 generates an attribute set $\Gamma$ using the user attribute information 292.

Formula (2) representing the attribute set $\Gamma$ is indicated below.

[Formula 2]

$$\Gamma := \left\{ \left( t, \vec{x}_t := \left( 1, x_t \right) \right), 1 \le t \le d \right\} \qquad \text{formula (2)}$$

For example, if the user attribute information 292 includes five attribute values "head office, A department, B section, section manager, Tanaka", an attribute set $\Gamma$_Tanaka can be expressed by following formula (3).

[Formula 3]

$$\Gamma_{\text{Tanaka}} := \left\{ \begin{array}{l} \left( 1, \vec{x}_1 := \left( 1, "\text{head office}" \right) \right), \left( 2, \vec{x}_2 := \left( 1, "A \text{ department}" \right) \right), \\ \left( 3, \vec{x}_3 := \left( 1, "B \text{ section}" \right) \right), \\ \left( 4, \vec{x}_4 := \left( 1, "\text{section manager}" \right) \right), \left( 5, \vec{x}_5 := \left( 1, "\text{Tanaka}" \right) \right) \end{array} \right\}$$

$$\text{formula (3)}$$

After S221, the process proceeds to S222.

In S222, the r-user secret key generating part 220 generates a user secret key sk_$\Gamma$ using the attribute set $\Gamma$.

Formula (4-1) to formula (4-5) serving to generate the user secret key sk_$\Gamma$ are indicated below. The user secret key sk_Γ can be expressed by formula (4-5).

Symbols employed in the following formulae are as follows.

"F_q" denotes a finite field representing a set of integers 0 to q-1.

"q" denotes an order of group included in "param" of the above formula (1-1).

"U←" (a symbol in which a character U is added above an arrow) denotes acquiring a value randomly. Note that the probabilities with which different values are acquired are the same.

For the meanings of other symbols, chapter 7.1 of Non-Patent Literature 1 should be referred to.

[Formula 4]

$$\delta, \phi_0 \xleftarrow{\quad U \quad} F_q \qquad \text{formula}\,(4-1)$$

$$\vec{\phi}_t \xleftarrow{\quad U \quad} F_q^{n_t} \qquad \text{formula}\,(4-2)$$

$$k_0^* := (\delta, 0, 1, \phi_0, 0)\, \hat{B}_0^* := \delta \cdot b_{0,1}^* + 1 \cdot b_{0,3}^* + \varphi_0 \cdot b_{0,4}^* \qquad \text{formula}\,(4-3)$$

$$k_t^* := \left(\delta \vec{x}_t, 0^{n_t}, \vec{\phi}_t, 0\right) \hat{B}_t^* := \delta \vec{x}_t \cdot b_{t,1}^* + 0^{n_t} \cdot b_{t,2}^* + \vec{\varphi}_t \cdot b_{t,3}^* \qquad \text{formula}\,(4-4)$$

$$sk_\Gamma := \left(\Gamma, k_0^*, \left\{k_t^*\right\}\right) \qquad \text{formula}\,(4-5)$$

Note that the above formula (4-1) to formula (4-5) are the same as the formulae indicated in chapter 7. 1 of Non-Patent Literature 1.

For example, when the attribute set Γ_Tanaka presented in the above formula (3) is employed, a user secret key sk_Tanaka can be generated by calculating the following formula (5-1) to formula (5-5).

[Formula 5]

$$\delta, \phi_0 \xleftarrow{\ U\ } F_q \qquad\qquad \text{formula } (5-1)$$

$$\vec{\phi_t} \xleftarrow{\ U\ } F_q^2 \{t = 1, \ldots, 5\} \qquad\qquad \text{formula } (5-2)$$

$$k_0^* := (\delta, 0, 1, \phi_0, 0) \hat{B}_0^* \qquad\qquad \text{formula } (5-3)$$

$$
\left.
\begin{aligned}
k_1^* &:= \left(\delta(1, "\text{head office}"), 0^2, \vec{\phi_1}, 0\right) \hat{B}_1^* \\[4pt]
k_2^* &:= \left(\delta(1, "A \text{ department}"), 0^2, \vec{\phi_2}, 0\right) \hat{B}_2^* \\[4pt]
k_3^* &:= \left(\delta(1, "B \text{ section}"), 0^2, \vec{\phi_3}, 0\right) \hat{B}_3^* \\[4pt]
k_4^* &:= \left(\delta(1, "\text{section manager}"), 0^2, \vec{\phi_4}, 0\right) \hat{B}_4^* \\[4pt]
k_5^* &:= \left(\delta(1, "\text{Tanaka}"), 0^2, \vec{\phi_5}, 0\right) \hat{B}_5^*
\end{aligned}
\right\} \quad \text{formula } (5-4)
$$

$$sk_{\text{Tanaka}} := \left( \Gamma_{\text{Tanaka}}, k_0^*, \{k_t^*\}_{t=1,\ldots,5} \right) \qquad\qquad \text{formula } (5-5)$$

After S222, the process proceeds to S223.

In S223, the r-user secret key generating part 220 generates a random number r.

After S223, the process proceeds to S224.

In S224, the r-user secret key generating part 220 generates a mask value mask using the random number r. The mask value mask is the inverse element of the random number r.

After S224, the process proceeds to S225.

Formula (6-1) for generating the random number r and formula (6-2) for generating the mask value mask are indicated below.

[Formula 6]

$$r \xleftarrow{\ U\ } F_q \qquad\qquad \text{formula } (6-1)$$

$$mask = r^{-1} \qquad\qquad \text{formula } (6-2)$$

In S225, the r-user secret key generating part 220 randomizes the user secret key sk_Γ using the random number r, thereby generating an r-user secret key sk_Γ-.

Note that "-" at the end of "sk_Γ-" represents an overline annexed to "sk". Also, the overline represents randomization "multiplication of the random number r" using the random number r.

Formula (7-1) to formula (7-3) for generating the r-user secret key sk_Γ- are indicated below. The r-user secret key sk_Γ- can be expressed by formula (7-3).

[Formula 7]

$$\overline{k}_0^* := r \cdot k_0^* = r \cdot \left( \delta, 0, 1, \phi_0, 0 \right) \hat{B}_0^* \qquad \text{formula } (7-1)$$

$$\overline{k}_t^* := r \cdot k_t^* = r \cdot \left( \delta \vec{x}_t, 0^{n_t}, \vec{\phi}_t, 0 \right) \hat{B}_t^* \qquad \text{formula } (7-2)$$

$$\overline{sk}_\Gamma := \left( \Gamma, \overline{k}_0^*, \left\{ \overline{k}_t^* \right\} \right) \qquad \text{formula } (7-3)$$

For example, when the user secret key sk_Tanaka indicated by the above formula (3) is randomized, an r-user secret key sk_Tanaka- that is randomized can be generated by calculating the following formula (8-1) to formula (8-3). Note that "-" at the end of "sk_Tanaka-" represents an overline annexed to "sk".

[Formula 8]

$$\overline{k}_0^* := r \cdot \left( \delta, 0, 1, \phi_0, 0 \right) \hat{B}_0^* \qquad \text{formula } (8-1)$$

$$\overline{k}_1^* := r \cdot \left( \delta \left( 1, \text{"head office"} \right), 0^2, \vec{\phi}_1, 0 \right) \hat{B}_1^*$$

$$\overline{k}_2^* := r \cdot \left( \delta \left( 1, \text{"A department"} \right), 0^2, \vec{\phi}_2, 0 \right) \hat{B}_2^*$$

$$\overline{k}_3^* := r \cdot \left( \delta \left( 1, \text{"B section"} \right), 0^2, \vec{\phi}_3, 0 \right) \hat{B}_3^* \qquad \text{formula } (8-2)$$

$$\overline{k}_4^* := r \cdot \left( \delta \left( 1, \text{"section manager"} \right), 0^2, \vec{\phi}_4, 0 \right) \hat{B}_4^*$$

$$\overline{k}_5^* := r \cdot \left( \delta \left( 1, \text{"Tanaka"} \right), 0^2, \vec{\phi}_5, 0 \right) \hat{B}_5^*$$

$$\overline{sk}_{\text{Tanaka}} := \left( \Gamma_{\text{Tanaka}}, \overline{k}_0^*, \left\{ \overline{k}_t^* \right\}_{t=1,\ldots,5} \right) \qquad \text{formula } (8-3)$$

After S225, the r-user secret key generating process (S220) ends.

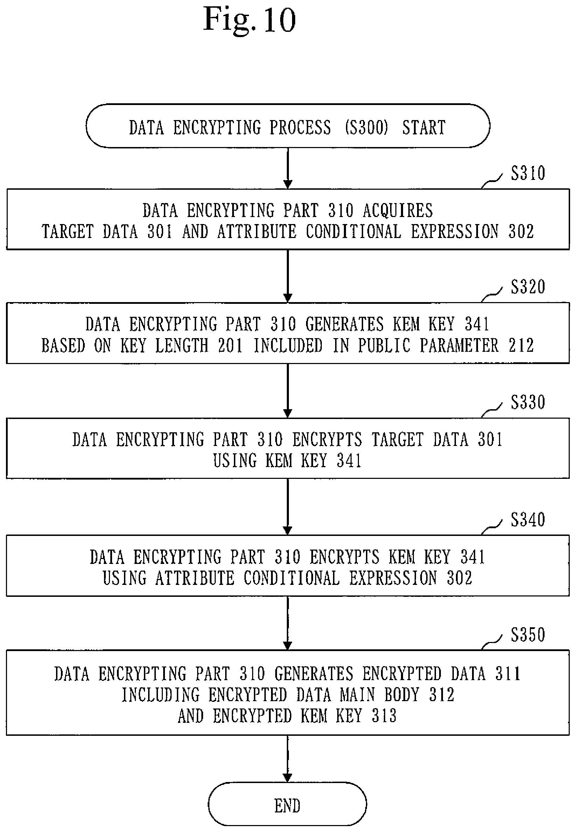

Fig. 10 is a flowchart illustrating the data encrypting process (S300) according to Embodiment 1.

The data encrypting process (S300) according to Embodiment 1 will be described with reference to Fig. 10.

In S310, a provider who provides the target data 301 enters the target data 301 to provide and the attribute conditional expression 302 including attribute values, to the access terminal 300. For example, when providing the target data 301 to a user belonging to A department or B department, the provider enters a logical expression "A department OR B department" as the attribute conditional expression 302.

Then, the data encrypting part 310 acquires the target data 301 and attribute conditional expression 302 entered to the access terminal 300.

After S310, the process proceeds to S320.

In S320, the data encrypting part 310 generates the KEM key 341 based on the key length 201 included in the public parameter 212. For example, when the key length 201 is 256 bits, the data encrypting part 310 generates a random bit string having 256 bits, as the KEM key 341.

Formula (9-1) to formula (9-3) serving to generate a KEM key K_KEM are indicated below. The KEM key K_KEM can be expressed by formula (9-3). The meanings of the symbols are as follows.

"g_T" denotes the basis of the elliptic curve parameter param included in the public parameter pk (refer to the the above formula (1-1)).

"key_L" is the value (for example, 256 bits) of the key length 201.

"KDF(m, key_L)" is a key derivation function (for example, KDF1 defined by ISO-18033) that calculates a key (random number) having a bit length key_L using an input value m (random seed).

[Formula 9]

$$r \xleftarrow{U} F_q \qquad \text{formula } (9-1)$$

$$m = g_T^r \qquad \text{formula } (9-2)$$

$$K_{KEM} = KDF(m, key_L) \qquad \text{formula } (9-3)$$

After S320, the process proceeds to S330.

In S330, the data encrypting part 310 encrypts the target data 301 in accordance with the common key encryption scheme (for example, AES) using the KEM key 341 as a common key, thereby generating the encrypted data main body 312.

After S330, the process proceeds to S340.

In S340, the data encrypting part 310 encrypts the KEM key 341 using the attribute conditional expression 302, thereby generating the encrypted KEM key 313.

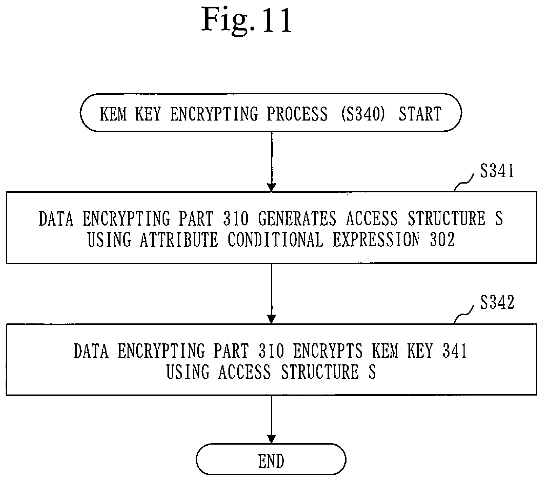

Fig. 11 is a flowchart illustrating the KEM key encrypting process (S340) according to Embodiment 1.

The KEM key encrypting process (S340) according to Embodiment 1 will be described with reference to Fig. 11.

In S341, the data encrypting part 310 generates an access structure S using the attribute conditional expression 302.

Formula (10-1) to formula (10-2) for generating the access structure S are indicated below. The access structure S can be expressed by formula (10-2). The meanings of the symbols are as follows.

"S" denotes an access structure that represents the attribute conditional expression 302.

"M" is a value calculated by, for example, a generally known Span Program.

"ρ" is a value obtained by mapping.

[Formula 10]

$$\rho : i \rightarrow (t_i, \vec{v_i}) \text{ or } \neg(t_i, \vec{v_i}) \qquad \text{formula } (10-1)$$

$$S : (M, \rho) \qquad \text{formula } (10-2)$$

For example, when the attribute conditional expression 302 is "A department OR B department", then "M" of the access structure S = (M, p) can be expressed by formula (11-1), and "p" can be expressed by formula (11-2).

[Formula 11]

$$M = \begin{pmatrix} 1 \\ 1 \end{pmatrix} \qquad \text{formula } (11-1)$$

$$\rho : \{1, 2\} \rightarrow \left\{ \begin{array}{l} (2, ("A \text{ department}", -1)), \\ (2, ("B \text{ department}", -1)) \end{array} \right\} \qquad \text{formula } (11-2)$$

After S341, the process proceeds to S342.

In S342, the data encrypting part 310 encrypts the KEM key 341 using the access structure S, thereby generating the encrypted KEM key 313.

Formula (12-1) to formula (12-8) for generating an encrypted KEM key ct_S are indicated below. The encrypted KEM key ct_S can be expressed by formula (12-8).

[Formula 12]

$$\vec{f} \xleftarrow{\quad R \quad} F_q^r \qquad \text{formula } (12-1)$$

$$\vec{s}^T := (s_1, \ldots, s_l)^T := M \cdot \vec{f}^T \qquad \text{formula } (12-2)$$

$$s_0 := \vec{1} \cdot \vec{f}^T \qquad \text{formula } (12-3)$$

$$\eta_0, \eta_i, \theta_i, \varsigma \xleftarrow{\quad U \quad} F_q, (i = 1, \ldots, l) \qquad \text{formula } (12-4)$$

$$c_0 := (-s_0, 0, \varsigma, 0, \eta_0)\hat{B}_0 \qquad \text{formula } (12-5)$$

$$\left.\begin{array}{l} \text{for } i = 1, \ldots, l \\ \quad \text{if } \rho(i) = (t, \vec{v}_i) \\ \qquad c_i := (s_i \vec{e}_{t,1} + \theta_i \vec{v}_i, 0^{n_t}, 0^{n_t}, \eta_i)\hat{B}_t \\ \quad \text{if } \rho(i) = \neg(t, \vec{v}_i) \\ \qquad c_i := (s_i \vec{v}_i, 0^{n_t}, 0^{n_t}, \eta_i)\hat{B}_t \end{array}\right\} \quad \text{formula } (12-6)$$

$$c_{d+1} := g_T^{\varsigma} \cdot m \qquad \text{formula } (12-7)$$

$$ct_S := (S, c_0, c_1, \ldots, c_l, c_{d+1}) \qquad \text{formula } (12-8)$$

Note that the above formula (12-1) to formula (12-8) are the same as the formulae indicated in chapter 7.1 of Non-Patent Literature 1.

Returning to Fig. 10, description on the data encrypting process (S300) will be continued.

After S340, the process proceeds to S350.

In S350, the data encrypting part 310 generates the encrypted data 311 that includes the encrypted data main body 312 and the encrypted KEM key 313.

Then, the terminal communication part 380 transmits the encrypted data 311 to the file server 190. The file server 190 stores the encrypted data 311.

After S350, the data encrypting process (S300) ends.

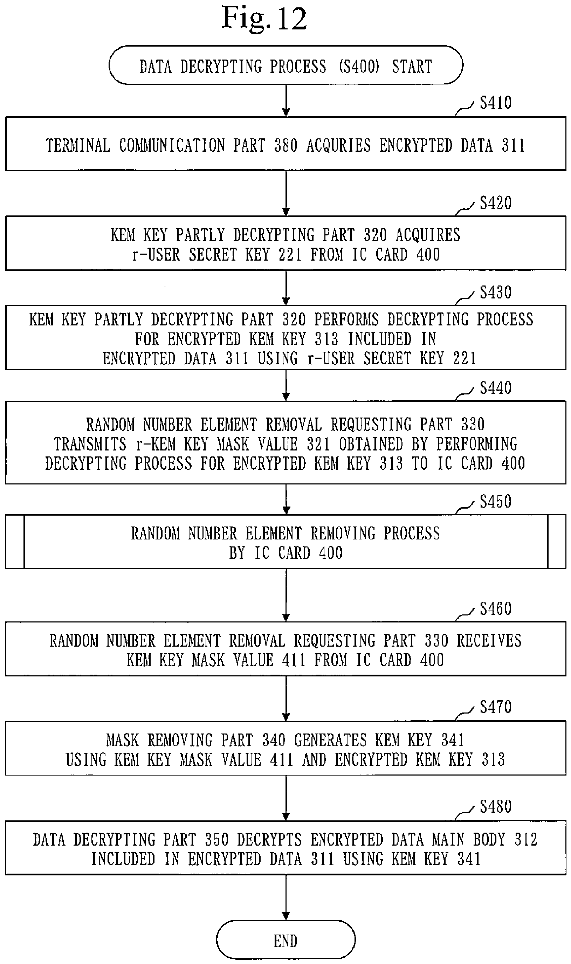

Fig. 12 is a flowchart illustrating the data decrypting process (S400) according to Embodiment 1.

The data decrypting process (S400) according to Embodiment 1 will be described with reference to Fig. 12

In S410, the user enters the file name of the encrypted data 311 to the access terminal 300.

Then, the terminal communication part 380 acquires, from the file server 190, the encrypted data 311 having the file name entered to the access terminal 300.

After S410, the process proceeds to S420.

In S420, the user connects the card R/W to the access terminal 300 and the IC card 400 to the card R/W.

The KEM key partly decrypting part 320 acquires the r-user secret key 221 from the IC card 400 via the card R/W.

After S420, the process proceeds to S430.

In S430, the KEM key partly decrypting part 320 acquires the encrypted KEM key 313 from the encrypted data 311, and performs a decrypting process for the encrypted KEM key 313 using the r-user secret key 221. The encrypted KEM key 313 decrypted using the r-user secret key 221 is the r-KEM key mask value 321.

If the attribute of the user does not satisfy the attribute conditional expression 302, the KEM key partly decrypting part 320 does not decrypt the encrypted KEM key 313.

The KEM key partly decrypting part 320 compares the attribute set $\Gamma$ included in the r-user secret key 221 with the access structure S included in the encrypted KEM key 313, and determines whether or not the attribute of the user satisfies the attribute conditional expression 302 based on the comparison result. The determination method for determining whether or not the attribute of the user satisfies the attribute conditional expression 302 is the same as in the conventional attribute-based encryption scheme (for example, the scheme disclosed in Non-Patent Literature 1).

Formula (13-1) to formula (13-3) for performing a decrypting process for the encrypted KEM key ct_S (see the above formula (12-8)) using the r-user secret key sk_$\Gamma$- (see formula (7-3)) are indicated below.

An r-KEM key mask value K- obtained by decryption can be expressed by formula (13-3). Note that "K-" is a symbol in which an overline is added above K.

The meanings of the symbols are as follows.

"M_i" is an ith row of M included in the access structure S.

"e" signifies pair mapping.

[Formula 13]

$$\vec{1} = \sum_{i \in I} \alpha_i M_i , \qquad \text{formula} (13-1)$$

$$I \subseteq \left\{ \begin{array}{c} i \in \{1,\dots,l\} \mid \left[ \rho(i) = (t,\vec{v}_i) \wedge (t,\vec{x}_t) \in \Gamma \wedge \vec{v}_i \cdot \vec{x}_t = 0 \right] \\ \vee \left[ \rho(i) = \neg(t,\vec{v}_i) \wedge (t,\vec{x}_t) \in \Gamma \wedge \vec{v}_i \cdot \vec{x}_t \neq 0 \right] \end{array} \right\}$$

$$\text{formula} (13-2)$$

$$\bar{K} := e\left(c_0, \bar{k}_0^*\right) \cdot \prod_{i \in I \wedge \rho(i)=(t,\vec{v}_i)} e\left(c_i, \bar{k}_t^*\right)^{\alpha_i} \cdot \prod_{i \in I \wedge \rho(i)=\neg(t,\vec{v}_i)} e\left(c_i, \bar{k}_t^*\right)^{\alpha_i/(\vec{v}_i \cdot \vec{x}_i)}$$

$$\text{formula} (13-3)$$

The above formula (13-1) to formula (13-3) are obtained by modifying part of equivalent formulae indicated in chapter 7.1 of Non-Patent Literature 1.

After S430, the process proceeds to S440.

In S440, the random number element removal requesting part 330 transmits the r-KEM key mask value 321 to the IC card 400 via the card R/W, thereby requesting removal of the random number element included in the r-KEM key mask value 321. The r-KEM key mask value 321 from which the random number element has been removed is the KEM key mask value 411.

After S440, the process proceeds to S450.

In S450, the IC card 400 receives the r-KEM key mask value 321 from the access terminal 300, removes the random number element from the r-KEM key mask value 321, and transmits the KEM key mask value 411 to the access terminal 300.

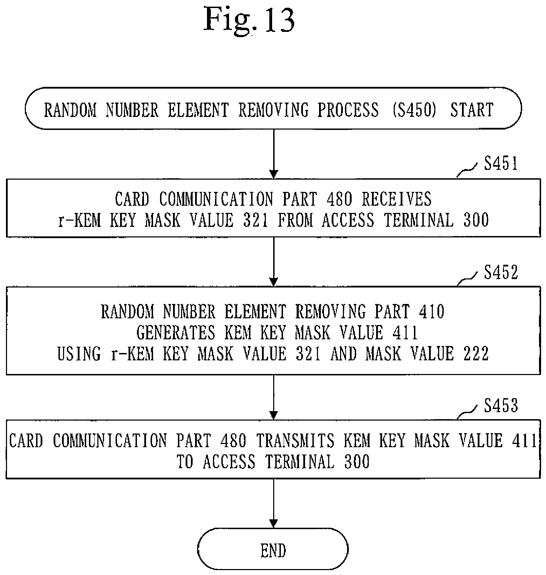

Fig. 13 is a flowchart illustrating the random number element removing process (S450) according to Embodiment 1.

The random number element removing process (S450) according to Embodiment 1 will be described with reference to Fig. 13.

In S451, the card communication part 480 receives the r-KEM key mask value 321 from the access terminal 300 via the card R/W.

After S451, the process proceeds to S452.

In S452, the random number element removing part 410 acquires the mask value 222 (inverse element of the random number element) from the card storage part 490, and removes a random number element concerning the random number r from the r-KEM key mask value 321 using the mask value 222. The KEM key mask value 411 is thus generated.

A KEM key mask value K can be expressed by the following formula (14). The meaning of the sign is as follows.

"K-^mask" means removing the random number element from the r-KEM key mask value K- using the mask value mask.

[Formula 14]

$$K = \overline{K}^{mask} \qquad \text{formula (14)}$$

After S452, the process proceeds to S453.

In S453, the card communication part 480 transmits the KEM key mask value 411 to the access terminal 300 via the card R/W.

After S453, the random number element removing process (S450) ends.

Returning to Fig. 12, description on the data decrypting process (S400) will be continued.

After the random number element removing process (S450), the process proceeds to S460.

In S460, the random number element removal requesting part 330 receives the KEM key mask value 411 from the IC card 400 via the card R/W.

After S460, the process proceeds to S470.

In S470, the mask removing part 340 generates the KEM key 341 using the KEM key mask value 411 and the encrypted KEM key 313.

Formula (15-1) to formula (15-2) for generating the KEM key K_KEM are indicated below. The KEM key K_KEM can be expressed by formula (15-2).

Note that $c_{d+1}$ is an element included in the encrypted KEM key ct_S (see the above formula (12-8)).

[Formula 15]

$$m = c_{d+1} / K \qquad \text{formula (15-1)}$$

$$K_{KEM} = KDF(m, 256) \qquad \text{formula (15-2)}$$

After S470, the process proceeds to S480.

In S480, the data decrypting part 350 acquires the encrypted data main body 312 from the encrypted data 311, and decrypts the encrypted data main body 312 into the target data 301 in accordance with the common key encryption scheme using the KEM key 341 as the common key.

The data decrypting part 350 then outputs the target data 301. For example, the data decrypting part 350 displays the target data 301 onto a display.

With S480, the data decrypting process (S400) ends.

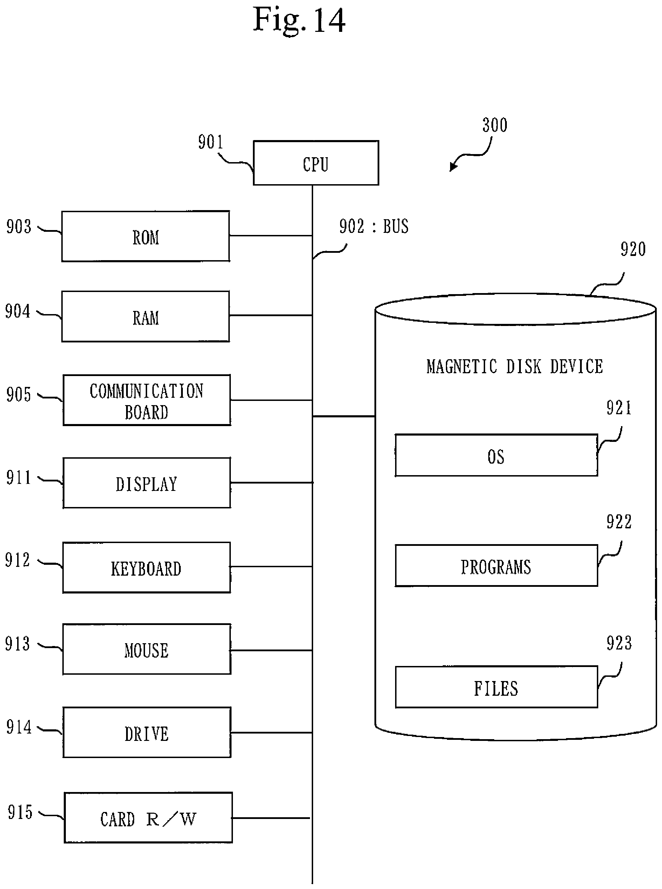

Fig. 14 illustrates an example of the hardware resources of the access terminal 300 according to Embodiment 1.

Referring to Fig. 14, the access terminal 300 (an example of the computer) includes a CPU 901 (Central Processing Unit). The CPU 901 is connected to hardware devices such as a ROM 903, a RAM 904, a communication board 905 (communication device), a display 911 (display device), a keyboard 912, a mouse 913, a drive 914, and a magnetic disk device 920 via a bus 902, and controls these hardware devices. The drive 914 is a device that reads from and writes to a storage medium such as an FD (Flexible Disk), a CD (Compact Disc), or a DVD (Digital Versatile Disc).

The ROM 903, RAM 904, magnetic disk device 920, and drive 914 are examples of a storage device. The keyboard 912, mouse 913, and communication board 905 are examples of an input device. The display 911 and communication board 905 are examples of an output device.

The communication board 905 is connected to a communication network such as a LAN (Local Area Network), internet, or telephone line by wire or in a wireless manner.

The magnetic disk device 920 stores an OS 921 (Operating System), programs 922, and files 923.

The programs 922 include a program that executes a function explained as a "part" in the embodiments. The program (for example, a data decrypting program) is read and executed by the CPU 901. More specifically, the program causes the computer to function as "part", and causes the computer to execute the procedure and method of the "part".

The files 923 include various types of data (input, output, determination result, calculation result, processing result, and the like) used in the "part" explained in the embodiments.

The arrows included in the configuration diagrams and flowcharts in the embodiments mainly indicate inputs and outputs of data and signals.

The processes of the embodiments described based on the flowcharts and the like are executed using hardware such as the CPU 901, the storage device, the input device, and the output device.

The "part" described in the embodiments may be a "circuit", "device", or "equipment"; or a "step", "procedure", or "process". Namely, the "part" may be implemented as firmware, software, or hardware; or by a combination of them.

The key generation server 200 includes hardware in the same manner as the access terminal 300 does. The IC card 400 includes an IC chip which is hardware corresponding to the CPU 901, the storage device, and the communication device.

The characteristic feature of Embodiment 1 resides particularly in formula (7-1) to formula (7-3) concerning the r-user secret key sk_$\Gamma$- described by S225 of Fig. 9.

The characteristic feature of Embodiment 1 also resides in formula (13-1) to formula (13-3) concerning the r-KEM key mask value K- described by S430 of Fig. 12, formula (14) concerning the KEM key mask value K described by S452 of Fig. 13, and formulae (15-1) and (15-2) concerning the KEM key K_KEM described by S470 of Fig. 12.

In Embodiment 1, only some element of the user secret key sk_$\Gamma$ may be randomized. How to randomize only some element of the user secret key sk_$\Gamma$ will be described in Embodiment 2.

Embodiment 1 may be applied as follows.

(1) In the attribute-based encryption system 100, the IC card storing the randomized user secret key and mask value need not be distributed to the user.

For example, an SD card (registered trademark; the same applies hereinafter) (SD: Secure Digital) or any other memory card storing a randomized user secret key and a mask value may be distributed to the user. The randomized user secret key and the mask value may be distributed to the access terminal via the network and be stored in the hard disk of the access terminal.

(2) The randomized user secret key and the mask value may be distributed independently of each other.

For example, the mask value may be stored in the IC card, and then the IC card may be distributed. The randomized user secret key may be distributed to the access terminal via the network.

Alternatively, the randomized user secret key may be distributed via the network, and then the encrypted KEM key may be partly decrypted. After that, the mask value may also be distributed to the access terminal via the network.

In this case, since the randomized user secret key and the mask value do not exist in the access terminal simultaneously, the security is ensured.

(3) The randomized user secret key and the mask value may be generated in the IC card.

In this case, the key generation server writes the user secret key to the IC card. The IC card generates the mask value and randomizes the user secret key (see Embodiment 2).

(4) The KEM key may be generated using g_T^$\zeta$ generated in S342, as the seed m of the KEM key. In this case, the KEM key is generated after the seed m = g_T^$\zeta$ is generated. Note that formula (15-1) used in the decrypting process becomes "m=K".

(5) A plurality of user secret keys may be assigned to a user belonging to a plurality of departments or sections.

(6) The user attribute information may be managed by a device that is different from the key generation server.

For example, the key generation server may use, as the user attribute information, personnel information managed by Active Directory of Windows (registered trademark), or the like.

(7) The public parameter may be stored in the IC card. The access terminal may acquire the public parameter from the key generation server via the network each time the access terminal uses the public parameter.

(8) The data need not be encrypted in accordance with the common key encryption scheme if the data can be directly encrypted in accordance with the attribute-based encryption scheme.

(9) The configuration of this embodiment is so designed as to minimize the computation executed by the IC card. There is, however, a possibility that an attacker selects a random numerical value instead of the r-KEM key mask value K- and execute the random number element removing process (S450), thereby making an attack to estimate the mask value secretly held in the IC card.

In order to protect the mask value from this attack, the IC card may be configured as follows.

(9-1) When calculating the KEM key mask value K by removing the random number element from the r-KEM key mask value K-, the (random number element removing part 410 of the) IC card may check whether or not the given r-KEM key mask value K- is a value having a predetermined order q, that is, whether or not the r-KEM key mask value K- is the correct value. The order q is a value used in, for example, formula (4-1) (the same applies hereinafter).

If the r-KEM key mask value K- is the correct value, the IC card calculates a KEM key mask value; if not, the IC card does not calculate the KEM key mask value.

This can be realized by raising the r-KEM key mask value K- to the power of q and checking if the result is equal to unit element 1.

If the value obtained by raising the r-KEM key mask value K- to the power of q is equal to unit element 1, then the r-KEM key mask value K- is the correct value; if not, the r-KEM key mask value K- is not the correct value.

(9-2) If limited checking suffices, a reject list in which a value to be rejected is set may be stored in the IC card in advance, and the value set in the reject list may be compared with the r-KEM key mask value K-.

An r-KEM key mask value K- that is different from the value set in the reject list is the correct value. An r-KEM key mask value K- that is the same as the value set in the reject list is not the correct value.

(9-3) The process of checking (9-1) or (9-2) described above takes time. In a simpler way, the parameter which is used by the IC card in order to remove the random number element from the r-KEM key mask value K- may be limited to a parameter that is resistant to the attack.

For example, generally, a multiplicative group of a finite field $F_{\{p^k\}}$ is used as the parameter for performing pair mapping of the attribute-based encryption scheme. The finite field $F_{\{p^k\}}$ is a set of values obtained by pair mapping the values of an elliptic curve $F_p$. The multiplicative group of the finite field $F_{\{p^k\}}$ is a set of integers of 0 to an order $\{p^k\}-1$. Note that "k" is called embedding degree.

Assume that the order $\{p^k\}-1$ of the multiplicative group of the finite field $F_{\{p^k\}}$ is factorized as $q \times 2 \times h$, where h may be a prime factor or a composite number. At this time, it is preferable to use, as the parameter of the IC card, a parameter with which the product of small prime factors (prime factors that are smaller than a predetermined prime factor threshold) becomes smaller than the order q. Such small prime factors are prime factors that facilitate solving a discrete logarithm problem, among a plurality of prime factors $p\_h$ obtained by prime factorization of the composite number h. This is because if a parameter with which the product of small prime factors $p\_h$ of the composite number h becomes larger than the order q is used, the discrete logarithm problem would be solved undesirably.

For example, assume that the composite number h is factorized as $h = 3 \times 5 \times 7 \times P$. Note that 3,5, and 7 are prime factors smaller than the prime factor threshold, and that P is a prime factor larger than the prime factor threshold. If the product of the small prime factors "105 (= $3 \times 5 \times 7$)" is smaller than the order q, then the multiplicative group of the finite field $F_{\{p^k\}}$ where the order $p^k-1$ is decomposed as $q \times 2 \times h$ is suitable as the parameter of the IC card.

Ideally, the number h itself is preferably a prime number.

Embodiment 1 can provide, for example, the following effects.

(1) An attribute-based encryption system capable of delegating decryption can be realized in a situation where the attacker is not limited (Adaptive-secure), based on the Okamoto-Takashima encryption-scheme algorithm described in Non-Patent Literature 1. Embodiment 1 may be applied to other encryption schemes proposed by Okamoto, Takashima, et al.

(2) The attribute-based encryption system 100 randomizes a user secret key by a randomly generated mask value, thereby converting the user secret key into a randomized user secret key (r-user secret key). The attribute-based encryption system 100 conducts partly decrypting computation using the randomized user secret key, on the access terminal side. The attribute-based encryption system 100 conducts only the randomization removing computation using the mask value, in the IC card.

The computation using the randomized user secret key includes pairing computation to be conducted by the decrypting process of the attribute-based encryption scheme, and occupies a major part of the decrypting process. On the other hand, the mask value removing computation to be conducted within the IC card conducts exponentiation only once and is accordingly a computation with a small processing amount.

Hence, the programs to be stored in the IC card having a small memory capacity can be made compact, and the amount of computation to be conducted in the IC card with a limited calculation resource can be reduced.

(3) The attribute-based encryption system 100 discloses a randomized user secret key obtained by randomizing a user secret key, to the access terminal.

If the randomized user secret key exists, without a mask value stored separately in the IC card, encrypted data cannot be decrypted.

Therefore, even when the randomized user secret key is disclosed to the access terminal, there is no risk of data leaking. Also, the user secret key will not leak from the randomized user secret key.

(4) The attribute-based encryption system 100 converts the user secret key into the randomized user secret key, using the mask value.

It is only the mask value that need be absolutely protected. Therefore, even when a low-power IC card having a memory capacity of as small as several tens of kilobytes is employed, the user secret key of the attribute-based encryption scheme can be protected securely.

(5) The attribute-based encryption system 100 generates the mask value with the key generation server, and converts the user secret key into the randomized user secret key.

Therefore, the main part of the decrypting process need not be conducted by the IC card having a small memory capacity or a few CPU resources. Even when a low-power IC card is employed, the user secret key of the attribute-based encryption scheme can be protected securely.

This embodiment has explained, for example, a data decryption device (300) as follows. Reference numerals explained in Embodiment 1 are attached in parentheses.

The data decryption device includes a common key partly decrypting part (320), a mask common key acquiring part (330), a mask removing part (340), and a data decrypting part (350).

The common key partly decrypting part generates a randomized mask common key (321) that includes a random number element, by performing a decrypting process for an encrypted common key (313) being a common key (341) encrypted using an attribute conditional expression including an attribute values, using a randomized secret key (221) which is obtained by including the random number element into a user secret key generated in accordance with an attribute-based encryption scheme using the attribute value representing an attribute.

The mask common key acquiring part acquires a mask common key (411) which is obtained by removing the random number element from the randomized mask common key generated by the common key partly decrypting part.

The mask removing part generates the common key using the mask common key acquired by the mask common key acquiring part.

The data decrypting part decrypts target data (301) having been encrypted using the common key, using the common key generated by the mask removing part.

The mask common key acquiring part transmits the randomized mask common key to a random number element removing device (400) serving to generate the mask common key, and receives the mask common key from the random number element removing device.

The random number element removing device generates the mask common key by removing the random number element from the randomized mask common key, using a mask value (222) which is generated using a random number that has been used in order to include the random number element into the user secret key.

The mask removing part generates the common key by generating an input value (m) using the mask common key and computing a key derivation function (KDF) using the generated input value.

This embodiment has explained, for example, a random number element removing device (400) as follows.

The random number element removing device includes a common key receiving part (480), a random number element removing part (410), and a common key transmitting part (480).

The common key receiving part receives a randomized mask common key (321) being a common key (341) that includes a random number element.

The random number element removing part generates a mask common key (411) which is obtained by removing the random number element from the randomized mask common key using a mask value (222) generated using a random number.

The common key transmitting part transmits the mask common key generated by the random number element removing part.

This embodiment has explained, for example, a randomized secret key generation device (200) as follows. The randomized secret key generation device includes a randomized secret key generating part (220).

The randomized secret key generating part generates a user secret key in accordance with an attribute-based encryption scheme using an attribute value representing an attribute, generates a randomized secret key (221) which is obtained by including a random number element into the user secret key generated, using a random number, and generates a mask value (222) for removing the random number element from the randomized secret key, using the random number.

Embodiment 2.

An embodiment will be described in which a key generation server 200 writes a user secret key to an IC card 400 in place of an r-user secret key 221, and the IC card 400 randomizes the user secret key, thereby generating the r-user secret key 221.

Matters that are different from in Embodiment 1 will now be mainly described. Matters that are not described are the same as in Embodiment 1.

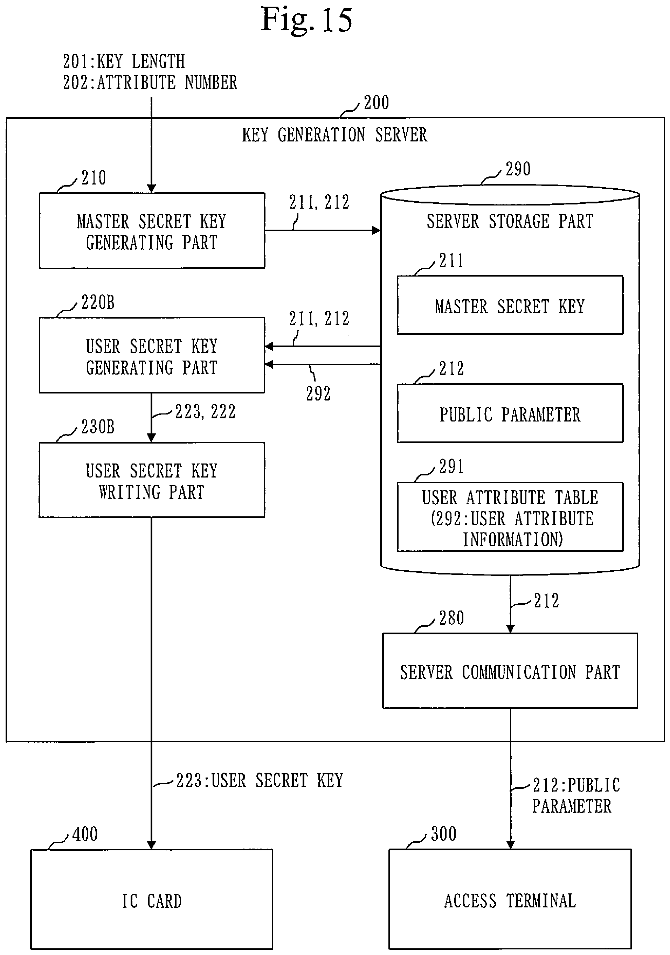

Fig. 15 is a functional configuration diagram of the key generation server 200 according to Embodiment 2.

The functional configuration of the key generation server 200 according to Embodiment 2 will be described with reference to Fig. 15.

The key generation server 200 includes a user secret key generating part 220B and a user secret key writing part 230B, in place of the r-user secret key generating part 220 and r-user secret key writing part 230 described in Embodiment 1 (see Fig. 2).

The user secret key generating part 220B generates a user secret key 223 using a master secret key 211, a public parameter 212, and user attribute information 292.

The user secret key writing part 230B writes the user secret key 223 to the IC card 400.

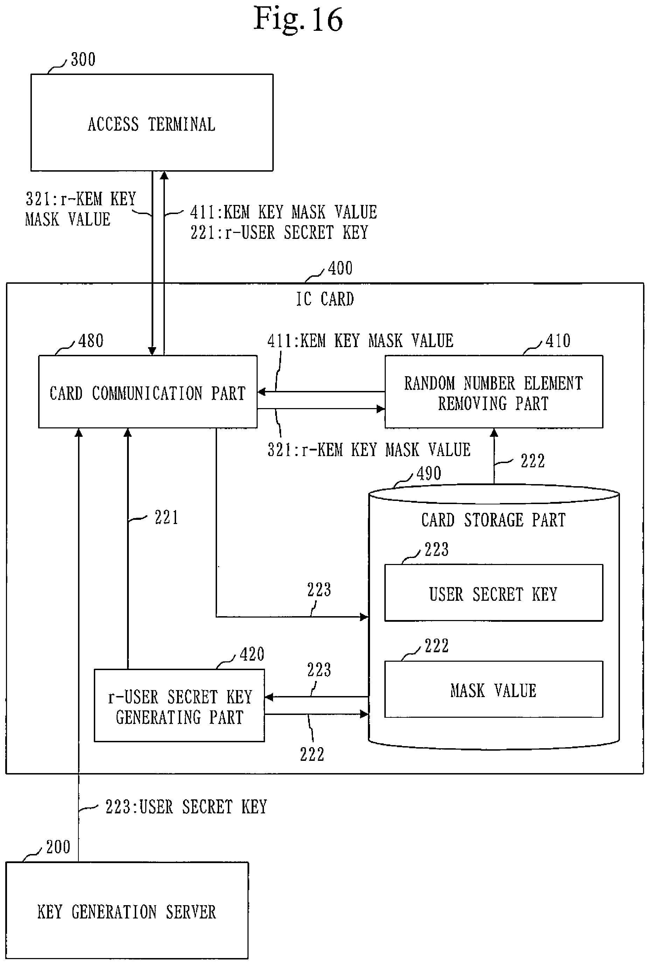

Fig. 16 is a functional configuration diagram of the IC card 400 according to Embodiment 2.

The functional configuration of the IC card 400 according to Embodiment 2 will be described with reference to Fig. 16.

The IC card 400 includes an r-user secret key generating part 420 in addition to the configuration described in Embodiment 1 (see Fig. 4).

The r-user secret key generating part 420 generates a mask value 222 and randomizes the user secret key 223 using the generated mask value 222, thereby generating the r-user secret key 221.

The functional configuration of an access terminal 300 is the same as in Embodiment 1 (see Fig. 3).

The process of an attribute-based encryption system 100 will now be described.

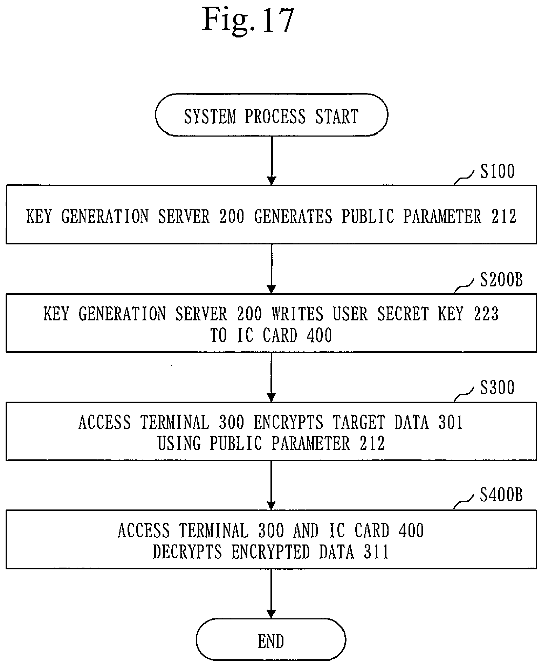

Fig. 17 is a flowchart showing the process outline of the attribute-based encryption system 100 according to Embodiment 2.

The process outline of the attribute-based encryption system 100 according to Embodiment 2 will be described with reference to Fig. 17.

The attribute-based encryption system 100 executes S200B and S400B in place of S200 and S400 described in Embodiment 1 (see Fig. 5).

In S100, the key generation server 200 generates the public parameter 212 (as in Embodiment 1).

In S200B, the key generation server 200 writes the user secret key 223 to the IC card 400, in place of the r-user secret key 221 and mask value 222.

In S300, the access terminal 300 encrypts target data 301 using the public parameter 212 (as in Embodiment 1).

In S400B, the access terminal 300 and the IC card 400 decrypt encrypted data 311.

The processes of the attribute-based encryption system 100 in detail will be described.

The initial setting process (S100) is the same as in Embodiment 1 (see Fig. 6).

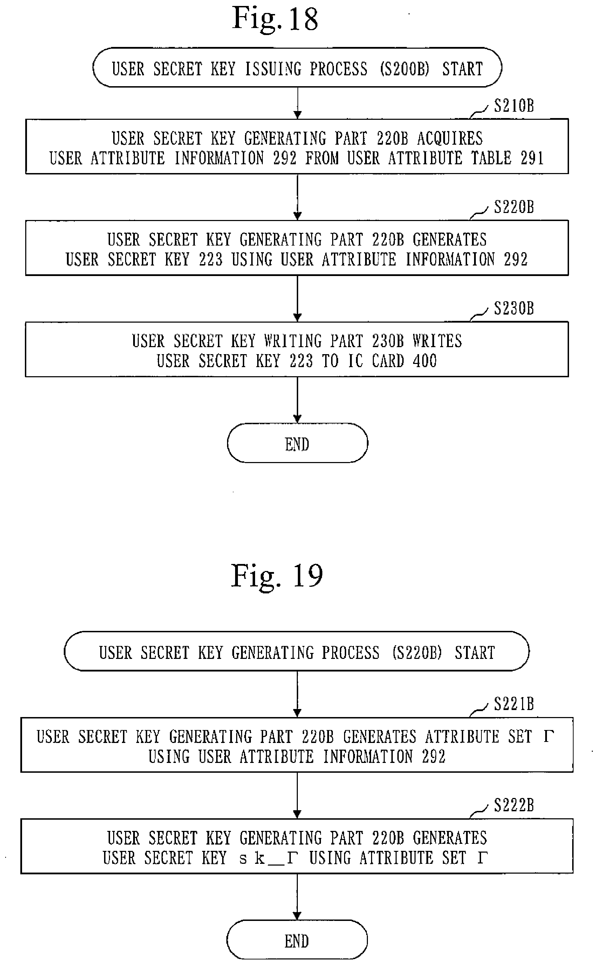

Fig. 18 is a flowchart illustrating the user secret key issuing process (S200B) according to Embodiment 2.

The user secret key issuing process (S200B) according to Embodiment 2 will be described with reference to Fig. 18.

In S210B, the user secret key generating part 220B acquires the user attribute information 292 including the attribute values, from a user attribute table 291.

S210B is the same as S210 described in Embodiment 1 (see Fig. 8).

After S210B, the process proceeds to S220B.

In S220B, the user secret key generating part 220B generates the user secret key 223, in place of the r-user secret key 221 and the mask value 222, using the user attribute information 292.

The user secret key generating process (S220B) will be described separately.

After S220B, the process proceeds to S230B.

In S230B, the user secret key writing part 230B writes the user secret key 223, in place of the r-user secret key 221 and the mask value 222, to the IC card 400. How to write data (223) to the IC card 400 is the same as S230 of Embodiment 1 (see Fig. 8).

After S230B, the user secret key issuing process (S200B) ends.

Fig. 19 is a flowchart illustrating the user secret key generating process (S220B) according to Embodiment 2.

The user secret key generating process (S220B) according to Embodiment 2 will be described with reference to Fig. 19.

In S221B, the user secret key generating part 220B generates an attribute set $\Gamma$ using the user attribute information 292.

S221B is the same as S221 described in Embodiment 1 (see Fig. 9).

After S221B, the process proceeds to S222B.

In S222B, the user secret key generating part 220B generates a user secret key sk_$\Gamma$ using the attribute set $\Gamma$.

S222B is the same as S222 described in Embodiment 1 (see Fig. 9).

After S222B, the user secret key generating process (S220B) ends.

The data encrypting process (S300) is the same as in Embodiment 1 (see Fig. 10).

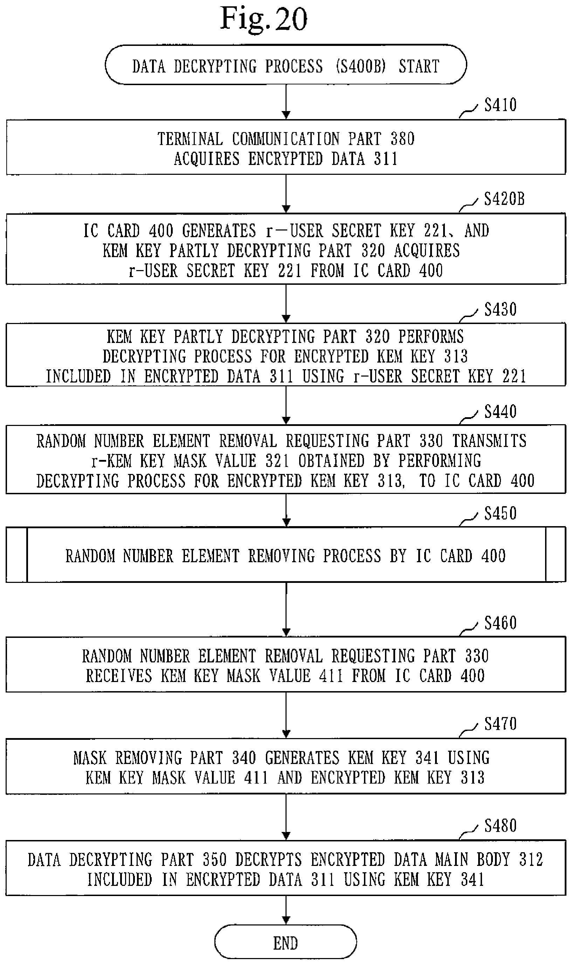

Fig. 20 is a flowchart illustrating the data decrypting process (S400B) according to Embodiment 2.

The data decrypting process (S400B) according to Embodiment 2 will be described with reference to Fig. 20.

The data decrypting process (S400B) includes S420B in place of S420 described in Embodiment 1 (see Fig. 12).

In S420B, the IC card 400 generates the r-user secret key 221 by randomizing the user secret key 223.

A KEM key partly decrypting part 320 acquires an r-user secret key 221 from the IC card 400.

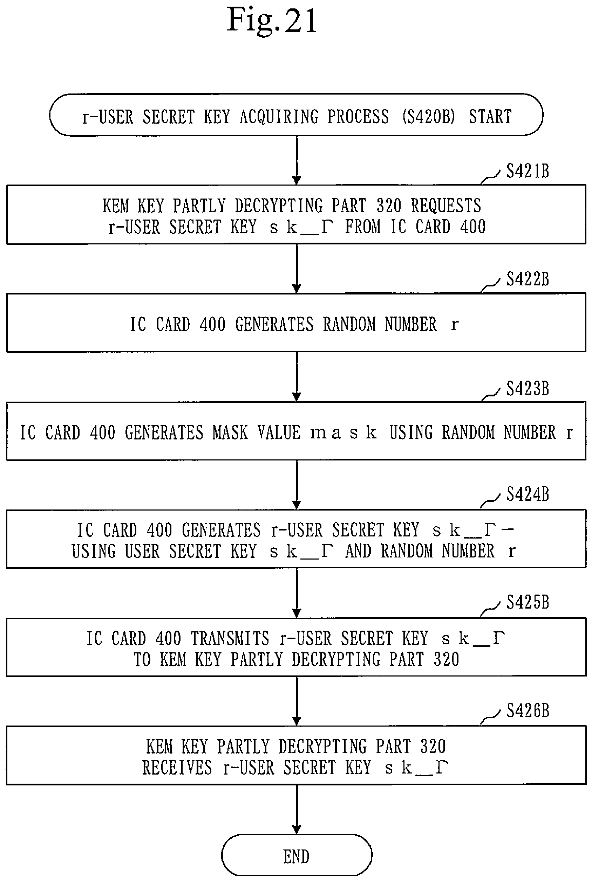

Fig. 21 is a flowchart illustrating the r-user secret key acquiring process (S420B) according to Embodiment 2.

The r-user secret key acquiring process (S420B) according to Embodiment 2 will be described with reference to Fig. 21.

In S421B, the KEM key partly decrypting part 320 requests the r-user secret key sk_Γ from the IC card 400.

After S421B, the process proceeds to S422B.

In S422B, the r-user secret key generating part 420 of the IC card 400 generates a random number r. How to generate the random number r is the same as in Embodiment 1 (see S223 of Fig. 9).

After S422B, the process proceeds to S423B.

In S432B, the r-user secret key generating part 420 generates a mask value mask using the random number r and stores the generated mask value mask to a card storage part 490. How to generate the mask value mask is the same as in Embodiment 1 (see S224 of Fig. 9).

After S423B, the process proceeds to S424B.

In S424B, the r-user secret key generating part 420 acquires the user secret key sk_Γ from the card storage part 490 and randomizes the user secret key sk_Γ using the random number r, thereby generating an r-user secret key sk_Γ-. How to generate the r-user secret key sk_Γ- is the same as in Embodiment 1 (see S225 of Fig. 9).

Alternatively, the r-user secret key generating part 420 may generate the the r-user secret key sk_Γ- by randomizing only some element of the user secret key sk_Γ. How to randomize only some element of the user secret key sk_Γ will be described separately.

After S424B, the process proceeds to S425B.

In S425B, a card communication part 480 transmits the r-user secret key sk_Γ- to the access terminal 300.

After S425B, the process proceeds to S426B.

In S426B, the KEM key partly decrypting part 320 of the access terminal 300 receives the r-user secret key sk_Γ- from the IC card 400.

After S426B, the r-user secret key acquiring process (S420B) ends.

A method of randomizing, in S424B (see Fig. 21), only some element of the user secret key sk_Γ will now be described.

The user secret key sk_Γ can be expressed by formula (16), as described in Embodiment 1.

[Formula 16]

$$sk_\Gamma := \left( \Gamma, k_0^*, \left\{ k_t^* \right\} \right) \qquad \text{formula (16)}$$

Formula (17-1) to formula (17-4) for randomizing a second element $k\_0^\wedge*$, without randomizing a third element $k\_t^\wedge*$ included in the user secret key sk_Γ, are indicated below. The second element $k\_0^\wedge*$ is an element that is always employed in the decrypting process.

[Formula 17]

$$r \xleftarrow{\quad U \quad} F_q \qquad \text{formula (17-1)}$$

$$mask = r^{-1} \qquad \text{formula (17-2)}$$

$$\overline{k}_0^* := r \cdot k_0^* = r \cdot \left( \delta, 0, 1, \varphi_0, 0 \right) \hat{B}_0^* \qquad \text{formula (17-3)}$$

$$\overline{sk}_\Gamma := \left( \Gamma, \overline{k}_0^*, \left\{ k_t^* \right\} \right) \qquad \text{formula (17-4)}$$

Alternatively, without randomizing the second element $k\_0^\wedge*$, another element (the third element $k\_t^\wedge*$) may be randomized.

The data decrypting process (S430 to S480 of Fig. 20) in a case wherein only some element of the user secret key sk_Γ is randomized will now be described.

In S430, the KEM key partly decrypting part 320 performs a decrypting process for an encrypted KEM key 313 using the r-user secret key 221, thereby generating an r-KEM key mask value 321.

Formula (18-1) to formula (18-4) for generating the r-KEM key mask value 321 are indicated below. Note that "K_1-" shown in formula (18-3) and "K_2" shown in formula (18-4) are each the r-KEM key mask value 321.

$$\vec{1} = \sum_{i \in I} \alpha_i M_i \qquad \text{formula } (18-1)$$

$$I \subseteq \left\{ \begin{array}{c} i \in \{1, \ldots, l\} \,|\, \left[ \rho(i) = (t, \vec{v}_i) \wedge (t, \vec{x}_t) \in \Gamma \wedge \vec{v}_i \cdot \vec{x}_t = 0 \right] \\ \vee \left[ \rho(i) = \neg(t, \vec{v}_i) \wedge (t, \vec{x}_t) \in \Gamma \wedge \vec{v}_i \cdot \vec{x}_t \neq 0 \right] \end{array} \right\} \qquad \text{formula } (18-2)$$

$$\bar{K}_1 := e\left(c_0, \bar{k}_0^*\right) \qquad \text{formula } (18-3)$$

$$K_2 = \prod_{i \in I \wedge \rho(i)=(t,\vec{v}_i)} e\left(c_i, k_t^*\right)^{\alpha_i} \cdot \prod_{i \in I \wedge \rho(i)=\neg(t,\vec{v}_i)} e\left(c_i, k_t^*\right)^{\alpha_i/(\vec{v}_i \cdot \vec{x}_t)} \qquad \text{formula } (18-4)$$

In S440, a random number element removal requesting part 330 transmits the r-KEM key mask value 321 to the IC card 400.

In S450, a random number element removing part 410 of the IC card 400 removes a random number element from an r-KEM key mask value K_1- using the mask value 222, thereby generating a KEM key mask value K_1.

The KEM key mask value K_1 can be expressed by the following formula (19).

[Formula 19]

$$K_1 = \bar{K}_1^{mask} \qquad \text{formula } (19)$$

In S460, the random number element removal requesting part 330 receives a KEM key mask value 411 from the IC card 400.

In S470, a mask removing part 340 generates a KEM key 341 using the KEM key mask values "K_1" and "K_2".

Formula (20-1) to formula (20-3) for generating a KEM key K_KEM are indicated below. The KEM key K_KEM can be expressed by formula (20-3).

[Formula 20]

$$K = K_1 \cdot K_2 \qquad \text{formula } (20\text{-}1)$$

$$m = c_{d+1} / K \qquad \text{formula } (20\text{-}2)$$

$$K_{KEM} = KDF(m, 256) \qquad \text{formula } (20\text{-}3)$$

In S480, the data decrypting part 350 decrypts the encrypted data main body 312 into the target data 301 in accordance with the common key encryption scheme using the KEM key 341.

With the above process, the encrypted data main body 312 can be decrypted into the target data 301.

Embodiment 2 can provide the following effects.

A key generation server writes an ordinary user secret key of the attribute-based encryption scheme to an IC card, and the IC card randomizes the user secret key. Thus, the attribute-based encryption system 100 can utilize an ordinary key generation server developed for an attribute-based encryption. Namely, the initial cost can be suppressed.

The IC card randomizes only that portion of the user secret key which is inevitably used in the decrypting process, instead of randomizing the user secret key entirely. This can largely save the work related to randomization of the user secret key.

Embodiment 2 can provide the same effects as the effects (1), (2), and (3) described in Embodiment 1.

Embodiment 2 may be applied in the following manner.

In the attribute-based encryption system 100, the IC card storing the user secret key need not be distributed to the user.

For example, an SD card or another memory card storing a user secret key may be distributed to the user. The user secret key may be distributed to the access terminal via the network, and may be stored in the hard disk of the access terminal.

The access terminal may partly decrypt the encrypted KEM key using the randomized user secret key. After that, the IC card may send the mask value to the access terminal, and the access terminal may remove the random number element.

In this case, since the randomized user secret key and the mask value do not exist in the access terminal simultaneously, the security can be ensured.

Alternatively, the key generation server may generate the randomized user secret key and the mask value (see Embodiment 1).

The KEM key may be generated using $g\_T^\zeta$ generated in S342, as the seed m of the KEM key (as in application (4) of Embodiment 1).

A plurality of user secret keys may be assigned to a user belonging to a plurality of departments or sections (as in application (5) of Embodiment 1).

The user attribute information may be managed by a device that is different from the key generation server (as in application (6) of Embodiment 1).

The public parameter may be stored in the IC card. The access terminal may acquire the public parameter from the key generation server via the network each time the access terminal uses the public parameter (as in application (7) of Embodiment 1).

The data need not be encrypted in accordance with the common key encryption scheme if the data can be directly encrypted in accordance with the attribute-based encryption scheme (as in application (8) of Embodiment 1).

When the IC card calculates the KEM key mask value K_1, whether no fraudulent attack is made on the IC card may be confirmed (as in application (9) of Embodiment 1).

Embodiment 2 has explained, for example, a random number element removing device (400) as follows. Reference numerals explained in Embodiment 2 are attached in parentheses.

The random number element removing device includes a randomized secret key generating part (420), a common key receiving part (480), a random number element removing part (410), and a common key transmitting part (480).

The randomized secret key generating part generates a randomized secret key (221) which is obtained by including, using a random number, a random number element into a user secret key (223) generated in accordance with the attribute-based encryption scheme using attribute values representing an attribute.

The common key receiving part receives a randomized mask common key (321) being a common key that includes the random number element.

The random number element removing part generates a mask common key (411) which is obtained by removing the random number element from the randomized mask common key using a mask value (222) generated using the random number.

The common key transmitting part transmits the mask common key generated by the random number element removing part.

Embodiment 3.

An embodiment of an attribute-based encryption system 100 that uses no IC card 400 will be described.

Matters that are different from in Embodiment 1 will be mainly described. Matters that are not described are the same as in Embodiment 1.

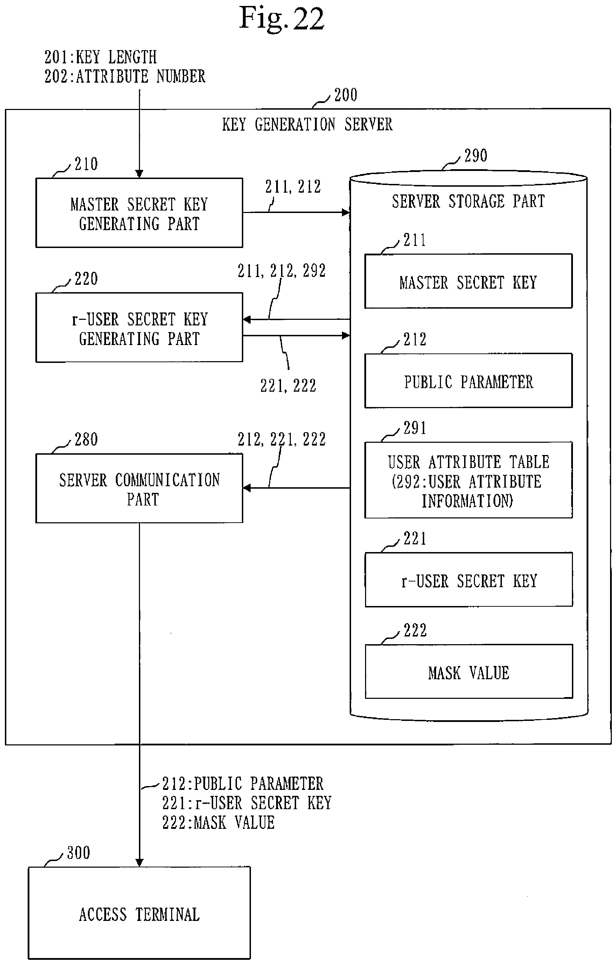

Fig. 22 is a functional configuration diagram of a key generation server 200 according to Embodiment 3.

The functional configuration of the key generation server 200 according to Embodiment 3 will be described with reference to Fig. 22.

The key generation server 200 need not include the r-user secret key writing part 230 described in Embodiment 1 (see Fig. 2)

A server storage part 290 stores an r-user secret key 221 and a mask value 222 which are generated by an r-user secret key generating part 220.

A server communication part 280 transmits the r-user secret key 221 and the mask value 222, in addition to a public parameter 212, to an access terminal 300.

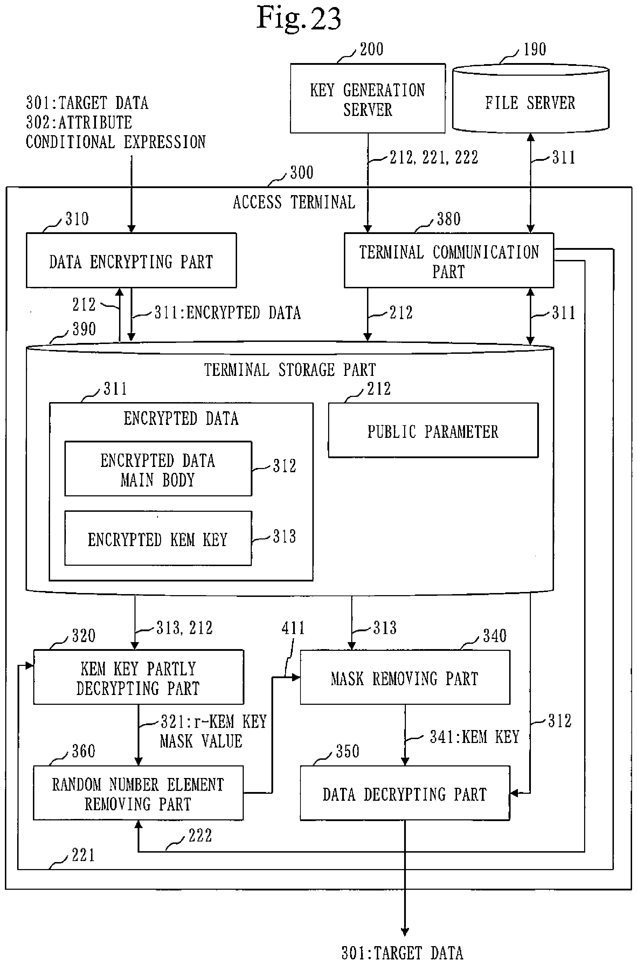

Fig. 23 is a functional configuration diagram of the access terminal 300 according to Embodiment 3.

The functional configuration of the access terminal 300 according to Embodiment 3 will be described with reference to Fig. 23.

The access terminal 300 includes a random number element removing part 360 in place of the random number element removal requesting part 330 described in Embodiment 1 (see Fig. 3).

The random number element removing part 360 removes a random number element from an r-KEM key mask value 321 using the mask value 222, thereby generating a KEM key mask value 411.

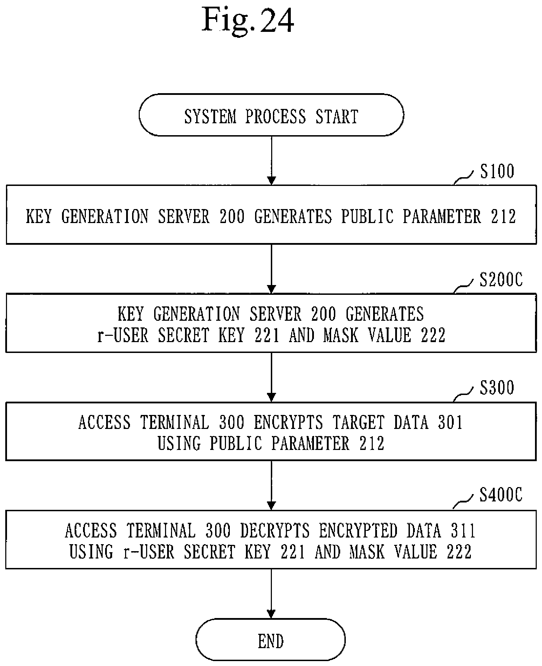

Fig. 24 is a flowchart illustrating the process outline of the attribute-based encryption system 100 according to Embodiment 3.

The process outline of the attribute-based encryption system 100 according to Embodiment 3 will be described with reference to Fig. 24.

The attribute-based encryption system 100 executes S200C and S400C in place of S200 and S400 described in Embodiment 1 (see Fig. 5).

In S100, the key generation server 200 generates the public parameter 212 (as in Embodiment 1).

In S200C, the key generation server 200 generates the r-user secret key 221 and the mask value 222. Note that the key generation server 200 need not write the r-user secret key 221 and the mask value 222 to an IC card 400.

In S300, the access terminal 300 encrypts target data 301 using the public parameter 212 (as in Embodiment 1).

In S400C, the access terminal 300 decrypts encrypted data 311 using the r-user secret key 221 and the mask value 222.

The processes of the attribute-based encryption system 100 in detail will be described hereinafter.

The initial setting process (S100) is the same as in Embodiment 1 (see Fig. 6).

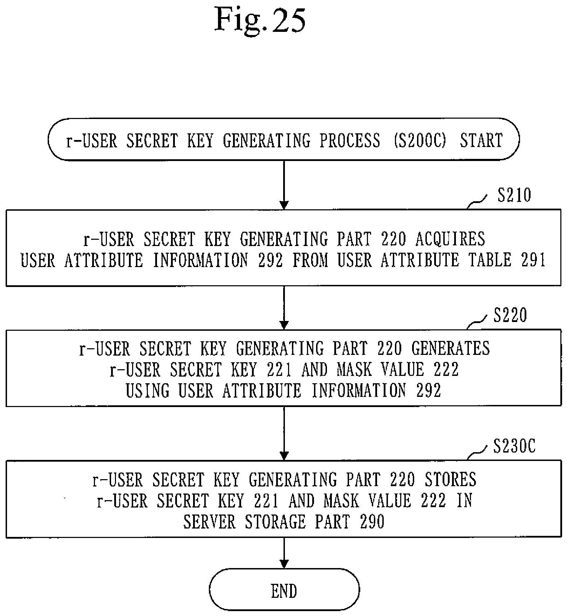

Fig. 25 is a flowchart illustrating the r-user secret key generating process (S200C) according to Embodiment 3.

The r-user secret key generating process (S200C) according to Embodiment 3 will be described with reference to Fig. 25.

The r-user secret key generating process (S200C) includes S230C in place of S230 described in Embodiment 1 (see Fig. 8).

In S230C, the r-user secret key generating part 220 stores the r-user secret key 221 and the mask value 222 to the server storage part 290 instead of writing the r-user secret key 221 and the mask value 222 to the IC card 400.

The data encrypting process (S300) is the same as in Embodiment 1 (see Fig. 10).

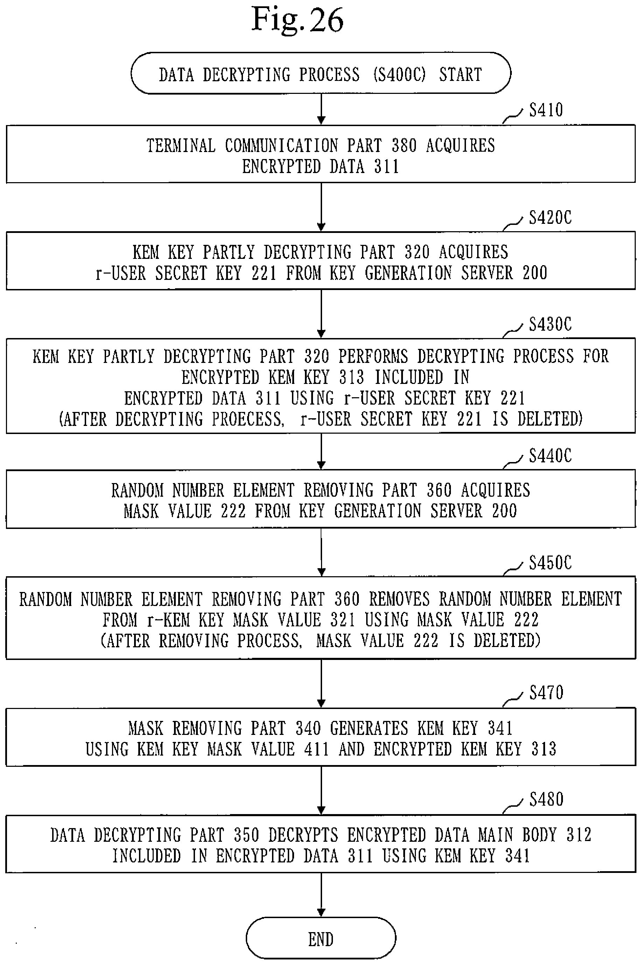

Fig. 26 is a flowchart illustrating the data decrypting process (S400C) according to Embodiment 3.

The data decrypting process (S400C) according to Embodiment 3 will be described with reference to Fig. 26.

The data decrypting process (S400C) includes S420C to S450C instead of S420 to S460 described in Embodiment 1 (see Fig. 12).

In S410, a terminal communication part 380 acquires the encrypted data 311 from a file server 190 (as in Embodiment 1).

In S420C, a KEM key partly decrypting part 320 requests the r-user secret key 221 from the key generation server 200 via the terminal communication part 380, thereby acquiring the r-user secret key 221.

In S430C, the KEM key partly decrypting part 320 performs a decrypting process for an encrypted KEM key 313 included in the encrypted data 311 using the r-user secret key 221, thereby generating an r-KEM key mask value 321. How to generate the r-KEM key mask value 321 is the same as in S430 of Embodiment 1.

After generating the r-KEM key mask value 321, the KEM key partly decrypting part 320 deletes the r-user secret key 221 from the access terminal 300.

In S440C, the random number element removing part 360 requests the mask value 222 from the key generation server 200 via the terminal communication part 380, thereby acquiring the mask value 222.

In S450C, the random number element removing part 360 removes a random number element from the r-KEM key mask value 321 using the mask value 222, thereby generating the KEM key mask value 411. How to generate the KEM key mask value 411 is the same as that of the random number element removing part 410 of the IC card 400 described in Embodiment 1.

After generating the KEM key mask value 411, the random number element removing part 360 removes the mask value 222 from the access terminal 300.

In S470, a mask removing part 340 generates KEM key 341 using the KEM key mask value 411 and the encrypted KEM key 313 (as in Embodiment 1).

In S480, a data decrypting part 350 decrypts an encrypted data main body 312 into target data 301 in accordance with the common key encryption scheme using the KEM key 341 as the common key (as in Embodiment 1).

With the above processes, the encrypted data main body 312 can be decrypted into the target data 301.

Embodiment 3 has described an embodiment of the attribute-based encryption system 100 that uses no IC card 400. However, the attribute-based encryption system 100 may use an IC card 400.

For example, the key generation server 200 may write the r-user secret key 221 to the IC card 400, and the access terminal 300 may acquire the r-user secret key 221 from the IC card 400.

The key generation server 200 may write the mask value 222 to the IC card 400, and the access terminal 300 may acquire the mask value 222 from the IC card 400.

Embodiment 3 can provide, for example, the following effects.

The attribute-based encryption system 100 first conducts partly decrypting computation using the randomized user secret key on the access terminal side, and thereafter conducts randomization removing computation using the mask value on the access terminal side. Therefore, the user secret key does not entirely appear on the access terminal at a time.

Hence, if there is malware that takes a snap shot of the main memory of the access terminal, the user secret key will not be acquired entirely although it may be acquired partly, so that the leaking risk of the user secret key can be reduced.

Embodiment 3 may be applied in the following manner.

The key generation server may read a randomized user secret key and a mask value written in a memory card such as an IC card or SD card. The randomized user secret key and the mask value may be distributed to the access terminal via the network, and randomized and stored in the hard disk of the access terminal. The randomized user secret key and the mask value may be decrypted and read each time they are to be used.

The randomized user secret key and the mask value may be distributed separately. For example, an IC card storing the mask value may be distributed, while the randomized user secret key may be distributed to the access terminal via the network.

The KEM key may be generated using $g\_T^\zeta$ generated in S342, as a seed m of the KEM key (as in application (4) of Embodiment 1).

A plurality of user secret keys may be assigned to a user belonging to a plurality of departments or sections (as in application (5) of Embodiment 1).

The user attribute information may be managed by a device that is different from the key generation server (as in application (6) of Embodiment 1).

The public parameter may be stored in the IC card. The access terminal may acquire the public parameter from the key generation server via the network each time the access terminal is to use the public parameter (as in application (7) of Embodiment 1).

The data need not be encrypted in accordance with the common key encryption scheme if the data can be directly encrypted in accordance with the attribute-based encryption scheme (as in application (8) of Embodiment 1).

Embodiment 3 may be applied to an encryption scheme other than Okamoto-Takashima encryption scheme described in Non-Patent Literature 1.

The embodiments may be combined partly or entirely within a non-contradicting range.

**Reference Signs List**

100: attribute-based encryption system; 101: in-house LAN; 190: file server; 200: key generation server; 201: key length; 202: attribute number; 210: master secret key generating part; 211: master secret key; 212: public parameter; 220: r-user secret key generating part; 220B: user secret key generating part; 221: r-user secret key; 222: mask value; 223: user secret key; 230: r-user secret key writing part; 230B: user secret key writing part; 280: server communication part; 290: server storage part; 291: user attribute table; 292: user attribute information; 300: access terminal; 301: target data; 302: attribute conditional expression; 310: data encrypting part; 311: encrypted data; 312: encrypted data main body; 313: encrypted KEM key; 320: KEM key partly decrypting part; 321: r-KEM key mask value; 330: random number element removal requesting part; 340: mask removing part; 341: KEM key; 350: data decrypting part; 360: random number element removing part; 380: terminal communication part; 390: terminal storage part; 400: IC card; 410: random number element removing part; 411: KEM key mask value; 420: r-user secret key generating part; 480: card communication part; 490: card storage part; 901: CPU; 902: bus; 903: ROM; 904: RAM; 905: communication board; 911: display; 912: keyboard; 913: mouse; 914: drive; 915: card R/W; 920: magnetic disk device; 921: OS; 922: programs; 923: files

**Claims**

**1.** A data decryption device (300) comprising:

a common key partly decrypting part (320) that is configured to generate a randomized mask common key including a random number element, by performing a decrypting process for an encrypted common key being a common key encrypted using an attribute conditional expression including an attribute value, using a randomized secret key which is obtained by including the random number element into a user secret key generated in accordance with an attribute-based encryption scheme using the attribute value representing an attribute;

a mask common key acquiring part (330) that is configured to acquire a mask common key which is obtained by removing the random number element from the randomized mask common key generated by the common key partly decrypting part;

a mask removing part (340) that is configured to generate the common key using the mask common key acquired by the mask common key acquiring part; and

a data decrypting part (350) that is configured to decrypt target data having been encrypted using the common key, using the common key generated by the mask removing part.

2. The data decryption device according to claim 1, wherein the mask common key acquiring part is configured to transmit the randomized mask common key to a random number element removing device serving to generate the mask common key, and receive the mask common key from the random number element removing device.

3. The data decryption device according to claim 2, wherein the random number element removing device is configured to generate the mask common key by removing the random number element from the randomized mask common key, using a mask value which is generated using a random number that has been used in order to include the random number element into the user secret key.

4. The data decryption device according to claim 2, wherein the random number element removing device is configured to generate the randomized secret key by generating a random number and including the random number element into the user secret key using the random number generated.

5. The data decryption device according to claim 1, wherein the mask removing part is configured to generate the common key by generating an input value using the mask common key and computing a key derivation function using the input value generated.

6. The data decryption device according to claim 1, wherein the mask common key acquiring part is configured to generate the mask common key by removing the random number element from the randomized mask common key using a mask value generated using a random number that has been used to include the random number element into the user secret key.

7. An attribute-based encryption system (100) comprising the data decryption device (300) according to claim 1, a randomized secret key generation device (200), and a random number element removing device (400),

the randomized secret key generation device (200) including

a randomized secret key generating part (220) that is configured to generate the randomized secret key using the user secret key and a random number, and generates a mask value for removing the random number element from the randomized mask common key, using the random number,

the random number element removing device (400) including

a common key receiving part (480) that is configured to receive the randomized mask common key,

a random number element removing part (410) that is configured to generate the mask common key using the randomized mask common key received by the common key receiving part and the mask value generated by the randomized secret key generating part, and

a common key transmitting part (480) that is configured to transmit the mask common key generated by the random number element removing part.

8. An attribute-based encryption system (100) comprising the data decryption device (300) according to claim 1, and a random number element removing device (400),

the random number element removing device including

a randomized secret key generating part (420) that is configured to generate the randomized secret key using the user secret key and a random number,

a common key receiving part (480) that is configured to receive the randomized mask common key,

a random number element removing part (410) that is configured to generate the mask common key using the randomized mask common key received by the common key receiving part and the mask value generated using the random number, and

a common key transmitting part (480) that is configured to transmit the mask common key generated by the random number element removing part.

9. An attribute-based encryption system (100) comprising the data decryption device (300) according to claim 1, and a randomized secret key generation device (200), the randomized secret key generation device including a randomized secret key generating part (220) that is configured to generate the randomized secret key using the user secret key and a random number, and generate a mask value for removing the random number element from the randomized mask common key, using the random number, wherein the mask common key acquiring part (330) in the data decryption device (300) is configured to generate the mask common key by removing the random number element from the randomized mask common key using the mask value generated by the randomized secret key generating part (220) in the randomized secret key generation device (200).

10. A random number element removing device (400), which is connected with the data decryption device (300) according to any of claims 1-6, comprising:

a common key receiving part (480) that is configured to receive a randomized mask common key being a common key that includes a random number element from the data decryption device (300); wherein a common key partly decrypting part (320) in the data decryption device (300) is configured to generate the randomized mask common key, by performing a decrypting process for an encrypted common key being a common key encrypted using an attribute conditional expression including an attribute value, using a randomized secret key which is obtained by including the random number element into a user secret key generated in accordance with an attribute-based encryption scheme using the attribute value representing an attribute; a random number element removing part (410) that is configured to generate a mask common key which is obtained by removing the random number element from the randomized mask common key using a mask value generated using a random number; and a common key transmitting part (480) that is configured to transmit the mask common key generated by the random number element removing part.

11. The random number element removing device according to claim 10, comprising a randomized secret key generating part (420) that is configured to generate a randomized secret key which is obtained by including, using the random number, the random number element into a user secret key generated in accordance with an attribute-based encryption scheme using an attribute value representing an attribute.

12. The random number element removing device according to claim 10, wherein the random number element removing part is configured to determine whether or not the randomized mask common key is a value having an order, and if the randomized mask common key is the value having the order, generate the mask common key.

13. The random number element removing device according to claim 10, that stores a reject list in which a value to be rejected is set, wherein the random number element removing part is configured to compare the randomized mask common key with the value set in the reject list, and if the randomized mask common key is a value that is different from the value set in the reject list, generate the mask common key.

14. The random number element removing device according to claim 10, that is configured to generate the mask common key by removing the random number element from the randomized mask common key using the mask value and a multiplicative group of a finite field which is factorizable into an order q, integer 2, and a prime number h.

15. The random number element removing device according to claim 10, that is configured to generate the mask common key by removing the random number element from the randomized mask common key using the mask value and a multiplicative group of a finite field which is factorizeble into an order q, integer 2, and a composite number h, wherein a product of prime factors which are smaller than a prime factor threshold, among a plurality of prime factors obtained by prime factorization of the composite number h, is smaller than the order q.

16. A data decryption method comprising:

generating, with a common key partly decrypting part (320), a randomized mask common key including a random number element, by performing a decrypting process for an encrypted common key being a common key encrypted using an attribute conditional expression including an attribute value, using a randomized secret key which is obtained by including the random number element into a user secret key generated in accordance with an attribute-based encryption scheme using the attribute value representing an attribute;
acquiring, with a mask common key acquiring part (330), a mask common key which is obtained by removing the random number element from the randomized mask common key generated by the common key partly decrypting part;
generating, with a mask removing part (340), the common key using the mask common key acquired by the mask common key acquiring part; and
decrypting, with a data decrypting part (350), target data having been encrypted using the common key, using the common key generated by the mask removing part.

17. A data decryption program that causes a computer to execute:

a common key partly decrypting process of generating a randomized mask common key including a random number element, by performing a decrypting process for an encrypted common key being a common key encrypted using an attribute conditional expression including an attribute value, using a randomized secret key which is obtained by including the random number element into a user secret key generated in accordance with an attribute-based encryption scheme using the attribute value representing an attribute;
a mask common key acquiring process of acquiring a mask common key which is obtained by removing the random number element from the randomized mask common key generated by the common key partly decrypting process;
a mask removing process of generating the common key using the mask common key acquired by the mask common key acquiring process; and
a data decrypting process of decrypting target data having been encrypted using the common key, using the common key generated by the mask removing process.

**Patentansprüche**

1. Datenentschlüsselungseinrichtung (300), umfassend:

einen gemeinsamer-Schlüssel-Teilentschlüsselungsabschnitt (320), der ausgelegt ist, um einen randomisierten Masken-Gemeinsamen-Schlüssel, der ein Zufallszahlelement enthält, zu erzeugen, indem ein Entschlüsselungsprozesses für einen verschlüsselten gemeinsamen Schlüssel durchgeführt wird, der ein gemeinsamer Schlüssel ist, der unter Verwendung eines attributabhängigen Ausdrucks, der einen Attributwert enthält, verschlüsselt ist, unter Verwendung eines randomisierten Geheimschlüssels, der erhalten wird, indem das Zufallszahlelement in einen Benutzergeheimschlüssel aufgenommen wird, der in Entsprechung mit einem attributbasierten Verschlüsselungsschema unter Verwendung des ein Attribut repräsentierenden Attributwerts erzeugt wird;
einen Masken-Gemeinsamer-Schlüssel-Akquirierungsabschnitt (330), der ausgelegt ist, um einen Masken-Gemeinsamen-Schlüssel zu akquirieren, der erhalten wird, indem das Zufallszahlelement aus dem randomisierten Masken-Gemeinsamen-Schlüssel, der durch den gemeinsamer-Schlüssel-Teilentschlüsselungsabschnitt erzeugt ist, entfernt wird;
einen Maskierungsentfernungsabschnitt (340), der ausgelegt ist, um den gemeinsamen Schlüssel unter Verwendung des Masken-Gemeinsamen-Schlüssels, der durch den Masken-Gemeinsamer-Schlüssel-Akquirierungsabschnitt akquiriert ist, zu erzeugen; und
einen Datenentschlüsselungsabschnitt (350), der ausgelegt ist, um Zieldaten zu entschlüsseln, die unter Verwendung des gemeinsamen Schlüssels verschlüsselt worden sind, unter Verwendung des gemeinsamen Schlüssels, der durch den Maskierungsentfernungsabschnitt erzeugt wurde.

2. Datenentschlüsselungseinrichtung nach Anspruch 1,
wobei der Masken-Gemeinsamer-Schlüssel-Akquirierungsabschnitt ausgelegt ist, um den randomisierten Masken-Gemeinsamen-Schlüssel an eine Zufallszahlelement-Entfernungseinrichtung zu übertragen, was dazu dient, den Masken-Gemeinsamen-Schlüssel zu erzeugen, und den Masken-Gemeinsamen-Schlüssel von der Zufallszahlelement-Entfernungseinrichtung zu empfangen.

3. Datenentschlüsselungseinrichtung nach Anspruch 2,
wobei die Zufallszahlelement-Entfernungseinrichtung ausgelegt ist, um den Masken-Gemeinsamen-Schlüssel zu erzeugen, indem das Zufallszahlelement aus dem randomisierten Masken-Gemeinsamen-Schlüssel entfernt wird, unter Verwendung eines Maskierungswerts, der unter Verwendung einer Zufallszahl erzeugt wurde, die verwendet worden ist, um das Zufallszahlelement in den Benutzergeheimschlüssel aufzunehmen.

4. Datenentschlüsselungseinrichtung nach Anspruch 2,
wobei die Zufallszahlelement-Entfernungseinrichtung ausgelegt ist, um den randomisierten Geheimschlüssel zu erzeugen, indem eine Zufallszahl erzeugt wird und das Zufallszahlelement in den Benutzergeheimschlüssel aufgenommen wird, unter Verwendung der erzeugten Zufallszahl.

5. Datenentschlüsselungseinrichtung nach Anspruch 1,
wobei der Maskierungsentfernungsabschnitt ausgelegt ist, um den gemeinsamen Schlüssel zu erzeugen, indem ein Eingabewert unter Verwendung des Masken-Gemeinsamen-Schlüssels erzeugt wird, und eine Schlüsselableitungsfunktion unter Verwendung des erzeugten Eingabewerts berechnet wird.

6. Datenentschlüsselungseinrichtung nach Anspruch 1,
wobei der Masken-Gemeinsamer-Schlüssel-Akquirierungsabschnitt ausgelegt ist, um den Masken-Gemeinsamen-Schlüssel zu erzeugen, indem das Zufallszahlelement aus dem randomisierten Masken-Gemeinsamen-Schlüssel entfernt wird, unter Verwendung eines Maskierungswerts, der unter Verwendung einer Zufallszahl erzeugt ist, die verwendet worden ist, um das Zufallszahlelement in den Benutzergeheimschlüssel aufzunehmen.

7. Attributbasiertes Verschlüsselungssystem (100), umfassend die Datenentschlüsselungseinrichtung (300) nach Anspruch 1, eine randomisierter-Geheimschlüssel-Erzeugungseinrichtung (200) und eine Zufallszahlelement-Entfernungseinrichtung (400),
wobei die randomisierter-Geheimschlüssel-Erzeugungseinrichtung (200) umfasst:

einen randomisierter-Geheimschlüssel-Erzeugungsabschnitt (220), der ausgelegt ist, um den randomisierten Geheimschlüssel zu erzeugen, unter Verwendung des Benutzergeheimschlüssels und einer Zufallszahl, und einen Maskierungswert zum Entfernen des Zufallszahlelements aus dem randomisierten Masken-Gemeinsamen-Schlüssel unter Verwendung der Zufallszahl zu erzeugen,

wobei die Zufallszahlelement-Entfernungseinrichtung (400) umfasst:

einen gemeinsamer-Schlüssel-Empfangsabschnitt (480), der ausgelegt ist, um den randomisierten Masken-Gemeinsamen-Schlüssel zu empfangen,
einen Zufallszahlelement-Entfernungsabschnitt (410), der ausgelegt ist, um den Masken-Gemeinsamen-Schlüssel zu erzeugen, unter Verwendung des randomisierten Masken-Gemeinsamen-Schlüssels, der vom gemeinsamer-Schlüssel-Empfangsabschnitt empfangen ist, und des Maskierungswerts, der durch den randomisierter-Geheimschlüssel-Erzeugungsabschnitt erzeugt ist, und
einen gemeinsamer-Schlüssel-Übertragungsabschnitt (480), der ausgelegt ist, um den Masken-Gemeinsamen-Schlüssel, der durch den Zufallszahlelement-Entfernungsabschnitt erzeugt ist, zu übertragen.

8. Attributbasiertes Verschlüsselungssystem (100), umfassend die Datenentschlüsselungseinrichtung (300) nach Anspruch 1, und eine Zufallszahlelement-Entfernungseinrichtung (400),
wobei die Zufallszahlelement-Entfernungseinrichtung enthält:

einen randomisierter-Geheimschlüssel-Erzeugungsabschnitt (420), der ausgelegt ist, um den randomisierten Geheimschlüssel unter Verwendung des Benutzergeheimschlüssels und einer Zufallszahl zu erzeugen,
einen gemeinsamer-Schlüssel-Empfangsabschnitt (480), der ausgelegt ist, um den randomisierten Masken-Gemeinsamen-Schlüssel zu empfangen,
einen Zufallszahlelement-Entfernungsabschnitt (410), der ausgelegt ist, um den Masken-Gemeinsamen-Schlüssel zu erzeugen, unter Verwendung des randomisierten Masken-Gemeinsamen-Schlüssels, der vom gemeinsamer-Schlüssel-Empfangsabschnitt empfangen ist, und des Maskierungswerts, der unter Verwendung der Zufallszahl erzeugt wurde, und
einen gemeinsamer-Schlüssel-Übertragungsabschnitt (480), der ausgelegt ist, um den vom Zufallszahlelement-Entfernungsabschnitt erzeugten Masken-Gemeinsamen-Schlüssel zu übertragen.

9. Attributbasiertes Verschlüsselungssystem (100), umfassend die Datenentschlüsselungseinrichtung (300) nach Anspruch 1, und eine randomisierter-Geheimschlüssel-Erzeugungseinrichtung (200),
wobei die randomisierter-Geheimschlüssel-Erzeugungseinrichtung enthält:

einen randomisierter-Geheimschlüssel-Erzeugungsabschnitt (220), der ausgelegt ist, um den randomisierten Geheimschlüssel zu erzeugen, unter Verwendung des Benutzergeheimschlüssels und einer Zufallszahl, und einen Maskierungswert zum Entfernen des Zufallszahlelements aus dem randomisierten Masken-Gemeinsamen-Schlüssel unter Verwendung der Zufallszahl zu erzeugen,

wobei der Masken-Gemeinsamer-Schlüssel-Akquirierungsabschnitt (330) in der Datenentschlüsselungseinrichtung (300) ausgelegt ist, um den Masken-Gemeinsamen-Schlüssel zu erzeugen, indem das Zufallszahlelement aus dem randomisierten Masken-Gemeinsamen-Schlüssel entfernt wird, unter Verwendung des Maskierungswerts, der durch den randomisierter-Geheimschlüssel-Erzeugungsabschnitt (220) in der randomisierter-Geheimschlüssel-Erzeugungseinrichtung (200) erzeugt wurde.

10. Zufallszahlelement-Entfernungseinrichtung (400), welche mit der Datenentschlüsselungseinrichtung (300) nach einem der Ansprüche 1 bis 6 verbunden ist, umfassend:

einen gemeinsamer-Schlüssel-Empfangsabschnitt (480), der ausgelegt ist, um einen randomisierten Masken-Gemeinsamen-Schlüssel zu empfangen, der ein gemeinsamer Schlüssel ist, der ein Zufallszahlelement aus der Datenentschlüsselungseinrichtung (300) enthält, wobei ein gemeinsamer-Schlüssel-Teilentschlüsselungsabschnitt (320) in der Datenentschlüsselungseinrichtung (300) ausgelegt ist, um den randomisierten Masken-Gemeinsamen-Schlüssel zu erzeugen, indem ein Entschlüsselungsprozess für einen verschlüsselten gemeinsamen Schlüssel durchgeführt wird, der ein gemeinsamer Schlüssel ist, der unter Verwendung eines attributabhängigen Ausdrucks, der einen Attributwert enthält, verschlüsselt ist, unter Verwendung eines randomisierten Geheimschlüssels, der erhalten wird, indem das Zufallszahlelement in einen Benutzergeheimschlüssel aufgenommen wird, der in Entsprechung mit einem attributbasierten Verschlüsselungsschema unter Verwendung des ein Attribut repräsentierenden Attributwerts erzeugt ist;

einen Zufallszahlelement-Entfernungsabschnitt (410), der ausgelegt ist, um einen Masken-Gemeinsamen-Schlüssel zu erzeugen, der erhalten wird, indem das Zufallszahlelement aus dem randomisierten Masken-Gemeinsamen-Schlüssel entfernt wird, unter Verwendung eines Maskierungswerts, der unter Verwendung einer Zufallszahl erzeugt wurde;

einen gemeinsamer-Schlüssel-Übertragungsabschnitt (480), der ausgelegt ist, um den Masken-Gemeinsamen-Schlüssel, der durch den Zufallszahlelement-Entfernungsabschnitt erzeugt ist, zu übertragen.

11. Zufallszahlelement-Entfernungseinrichtung nach Anspruch 10, umfassend einen randomisierter-Geheimschlüssel-Erzeugungsabschnitt (420), der ausgelegt ist, um einen randomisierten Geheimschlüssel zu erzeugen, der erhalten wird, indem unter Verwendung der Zufallszahl das Zufallszahlelement in einen Benutzergeheimschlüssel aufgenommen wird, der in Entsprechung mit einem attributbasierten Verschlüsselungsschema unter Verwendung eines ein Attribut repräsentierenden Attributwerts erzeugt wird.

12. Zufallszahlelement-Entfernungseinrichtung nach Anspruch 10, wobei der Zufallszahlelement-Entfernungsabschnitt ausgelegt ist, um zu bestimmen, ob oder ob nicht der randomisierte Masken-Gemeinsame-Schlüssel ein Wert ist, der eine Ordnung aufweist, und wenn der randomisierte Masken-Gemeinsame-Schlüssel der Wert ist, der die Ordnung aufweist, den Masken-Gemeinsamen-Schlüssel zu erzeugen.

13. Zufallszahlelement-Entfernungseinrichtung nach Anspruch 10, die eine Zurückweisungsliste speichert, in welcher ein zurückzuweisender Wert eingestellt ist, wobei der Zufallszahlelement-Entfernungsabschnitt ausgelegt ist, um den randomisierten Masken-Gemeinsamen-Schlüssel mit dem in der Zurückweisungsliste eingestellten Wert zu vergleichen, und wenn der randomisierte Masken-Gemeinsame-Schlüssel ein Wert ist, der sich von dem in der Zurückweisungsliste eingestellten Wert unterscheidet, den Masken-Gemeinsamen-Schlüssel zu erzeugen.

14. Zufallszahlelement-Entfernungseinrichtung nach Anspruch 10, die ausgelegt ist, um den Masken-Gemeinsamen-Schlüssel zu erzeugen, indem das Zufallszahlelement aus dem randomisierten Masken-Gemeinsamen-Schlüssel entfernt wird, unter Verwendung des Maskierungswerts und einer multiplikativen Gruppe eines endlichen Körpers, der in eine Ordnung q, ganze Zahl 2, und eine Primzahl h zerlegbar ist.

15. Zufallszahlelement-Entfernungseinrichtung nach Anspruch 10, die ausgelegt ist, um den Masken-Gemeinsamen-Schlüssel zu erzeugen, indem das Zufallszahlelement aus dem randomisierten Masken-Gemeinsamen-Schlüssel entfernt wird, unter Verwendung des Maskierungswerts und einer multiplikativen Gruppe eines endlichen Körpers, der in eine Ordnung q, ganze Zahl 2 und eine zusammengesetzte Zahl h zerlegbar ist, wobei ein Produkt von Primfaktoren, die kleiner sind als ein Primfaktorschwellenwert, unter einer Vielzahl von Primfaktoren, die durch Primfaktorzerlegung der zusammengesetzten Zahl h erhalten wurden, kleiner ist als die Ordnung q.

16. Datenentschlüsselungsverfahren, umfassend:

Erzeugen mit einem gemeinsamer-Schlüssel-Teilentschlüsselungsabschnitt (320) eines randomisierten Masken-Gemeinsamen-Schlüssels, der ein Zufallszahlelement enthält, indem ein Entschlüsselungsprozess für einen verschlüsselten gemeinsamen Schlüssel durchgeführt wird, der ein gemeinsamer Schlüssel ist, der unter Verwendung eines attributabhängigen Ausdrucks, der einen Attributwert enthält, verschlüsselt ist, unter Verwendung eines randomisierten Geheimschlüssels, der erhalten wird, indem das Zufallszahlelement in einen Benutzergeheimschlüssel aufgenommen wird, der in Entsprechung mit einem attributbasierten Verschlüsselungsschema unter Verwendung des ein Attribut repräsentierenden Attributwerts erzeugt wird;
Akquirieren mit einem Masken-Gemeinsamer-Schlüssel-Akquirierungsabschnitt (330) eines Masken-Gemeinsamen-Schlüssels, der erhalten wird, indem das Zufallszahlelement von dem randomisierten Masken-Gemeinsamen-Schlüssel entfernt wird, der durch den gemeinsamer-Schlüssel-Teilentschlüsselungsabschnitt erzeugt ist;
Erzeugen mit einem Maskierungsentfernungsabschnitt (340) des gemeinsamen Schlüssels unter Verwendung des Masken-Gemeinsamen-Schlüssels, der durch den Masken-Gemeinsamer-Schlüssel-Akquirierungsabschnitt akquiriert ist; und
Entschlüsseln mit einem Datenentschlüsselungsabschnitt (350) von Zieldaten, die unter Verwendung des gemeinsamen Schlüssels verschlüsselt worden sind, unter Verwendung des gemeinsamen Schlüssels, der durch den Maskierungsentfernungsabschnitt erzeugt wurde.

17. Datenentschlüsselungsprogramm, das einen Computer veranlasst, um auszuführen:

einen gemeinsamer-Schlüssel-Teilentschlüsselungsprozess zum Erzeugen eines randomisierten Masken-Gemeinsamen-Schlüssels, der ein Zufallszahlelement enthält, indem ein Entschlüsselungsprozess für einen verschlüsselten gemeinsamen Schlüssel durchgeführt wird, der ein gemeinsamer Schlüssel ist, der unter Verwendung eines attributabhängigen Ausdrucks, der einen Attributwert enthält, verschlüsselt ist, unter Verwendung eines randomisierten Geheimschlüssels, der erhalten wird, indem das Zufallszahlelement in einen Benutzergeheimschlüssel aufgenommen wird, der in Entsprechung mit einem attributbasierten Verschlüsselungsschema unter Verwendung des ein Attribut repräsentierenden Werts erzeugt ist;
einen Masken-Gemeinsamer-Schlüssel -Akquirierungsprozess zum Akquirieren eines Masken-Gemeinsamen-Schlüssels, der erhalten wird, indem das Zufallszahlelement aus dem randomisierten Masken-Gemeinsamen-Schlüssels, der durch den gemeinsamer-Schlüssel-Teilentschlüsselungsprozess erzeugt wird, entfernt wird;
einen Maskierungsentfernungsprozess zum Erzeugen des gemeinsamen Schlüssels unter Verwendung des Masken-Gemeinsamen-Schlüssels, der durch den Masken-Gemeinsamer-Schlüssel-Akquirierungsprozess akquiriert wird, und
einen Datenentschlüsselungsprozess zum Entschlüsseln von Zieldaten, die unter Verwendung des gemeinsamen Schlüssels verschlüsselt worden sind, unter Verwendung des durch den Maskierungsentfernungsprozess erzeugten gemeinsamen Schlüssels.

## Revendications

1. Dispositif de déchiffrement de données (300) comprenant :

une partie de déchiffrement partiel de clé commune (320) qui est configurée de manière à générer une clé commune de masque randomisée incluant un élément de nombre aléatoire, en mettant en oeuvre un processus de déchiffrement d'une clé commune chiffrée laquelle est une clé commune chiffrée utilisant une expression conditionnelle d'attribut incluant une valeur d'attribut, en utilisant une clé secrète randomisée qui est obtenue en incluant l'élément de nombre aléatoire dans une clé secrète d'utilisateur générée selon un schéma de chiffrement à base d'attributs utilisant la valeur d'attribut représentant un attribut ;
une partie d'acquisition de clé commune de masque (330) qui est configurée de manière à acquérir une clé commune de masque obtenue en supprimant l'élément de nombre aléatoire de la clé commune de masque randomisée générée par la partie de déchiffrement partiel de clé commune ;
une partie de suppression de masque (340) qui est configurée de manière à générer la clé commune en utilisant la clé commune de masque acquise par la partie d'acquisition de clé commune de masque ; et

une partie de déchiffrement des données (350) qui est configurée de manière à déchiffrer des données cibles qui ont été chiffrées en faisant appel à la clé commune, en utilisant la clé commune générée par la partie de suppression de masque.

**2.** Dispositif de déchiffrement de données selon la revendication 1,
dans lequel la partie d'acquisition de clé commune de masque est configurée de manière à transmettre la clé commune de masque randomisée à un dispositif de suppression d'élément de nombre aléatoire qui sert à générer la clé commune de masque, et à recevoir la clé commune de masque en provenance du dispositif de suppression d'élément de nombre aléatoire.

**3.** Dispositif de déchiffrement de données selon la revendication 2,
dans lequel le dispositif de suppression d'élément de nombre aléatoire est configuré de manière à générer la clé commune de masque en supprimant l'élément de nombre aléatoire de la clé commune de masque randomisée, en utilisant une valeur de masque qui est générée en utilisant un nombre aléatoire qui a été utilisé afin d'inclure l'élément de nombre aléatoire dans la clé secrète d'utilisateur.

**4.** Dispositif de déchiffrement de données selon la revendication 2,
dans lequel le dispositif de suppression d'élément de nombre aléatoire est configuré de manière à générer la clé secrète randomisée en générant un nombre aléatoire et en incluant l'élément de nombre aléatoire dans la clé secrète d'utilisateur en utilisant le nombre aléatoire généré.

**5.** Dispositif de déchiffrement de données selon la revendication 1,
dans lequel la partie de suppression de masque est configurée de manière à générer la clé commune en générant une valeur d'entrée en utilisant la clé commune de masque, et en calculant une fonction de dérivation de clé en utilisant la valeur d'entrée générée.

**6.** Dispositif de déchiffrement de données selon la revendication 1,
dans lequel la partie d'acquisition de clé commune de masque est configurée de manière à générer la clé commune de masque en supprimant l'élément de nombre aléatoire de la clé commune de masque randomisée en utilisant une valeur de masque générée en utilisant un nombre aléatoire qui a été utilisé pour inclure l'élément de nombre aléatoire dans la clé secrète d'utilisateur.

**7.** Système de chiffrement à base d'attributs (100) comprenant le dispositif de déchiffrement de données (300) selon la revendication 1, un dispositif de génération de clé secrète randomisée (200), et un dispositif de suppression d'élément de nombre aléatoire (400) ;
le dispositif de génération de clé secrète randomisée (200) incluant :

une partie de génération de clé secrète randomisée (220) qui est configurée de manière à générer la clé secrète randomisée en utilisant la clé secrète d'utilisateur et un nombre aléatoire, et qui génère une valeur de masque pour supprimer l'élément de nombre aléatoire de la clé commune de masque randomisée, en utilisant le nombre aléatoire ;

le dispositif de suppression d'élément de nombre aléatoire (400) incluant :

une partie de réception de clé commune (480) qui est configurée de manière à recevoir la clé commune de masque randomisée ;
une partie de suppression d'élément de nombre aléatoire (410) qui est configurée de manière à générer la clé commune de masque en utilisant la clé commune de masque randomisée reçue par la partie de réception de clé commune et la valeur de masque générée par la partie de génération de clé secrète randomisée ; et
une partie de transmission de clé commune (480) qui est configurée de manière à transmettre la clé commune de masque générée par la partie de suppression d'élément de nombre aléatoire.

**8.** Système de chiffrement à base d'attributs (100) comprenant le dispositif de déchiffrement de données (300) selon la revendication 1, et un dispositif de suppression d'élément de nombre aléatoire (400) ;
le dispositif de suppression d'élément de nombre aléatoire incluant :

une partie de génération de clé secrète randomisée (420) qui est configurée de manière à générer la clé secrète randomisée en utilisant la clé secrète d'utilisateur et un nombre aléatoire ;

une partie de réception de clé commune (480) qui est configurée de manière à recevoir la clé commune de masque randomisée ;

une partie de suppression d'élément de nombre aléatoire (410) qui est configurée de manière à générer la clé commune de masque en utilisant la clé commune de masque randomisée reçue par la partie de réception de clé commune et la valeur de masque générée en utilisant le nombre aléatoire ; et

une partie de transmission de clé commune (480) qui est configurée de manière à transmettre la clé commune de masque générée par la partie de suppression d'élément de nombre aléatoire.

9.  Système de chiffrement à base d'attributs (100) comprenant le dispositif de déchiffrement de données (300) selon la revendication 1, et un dispositif de génération de clé secrète randomisée (200) ;
    le dispositif de génération de clé secrète randomisée incluant :

    une partie de génération de clé secrète randomisée (220) qui est configurée de manière à générer la clé secrète randomisée en utilisant la clé secrète d'utilisateur et un nombre aléatoire, et à générer une valeur de masque pour supprimer l'élément de nombre aléatoire de la clé commune de masque randomisée, en utilisant le nombre aléatoire ;

    dans lequel la partie d'acquisition de clé commune de masque (330) du dispositif de déchiffrement de données (300) est configurée de manière à générer la clé commune de masque en supprimant l'élément de nombre aléatoire de la clé commune de masque randomisée en utilisant la valeur de masque générée par la partie de génération de clé secrète randomisée (220) du dispositif de génération de clé secrète randomisée (200).

10. Dispositif de suppression d'élément de nombre aléatoire (400), lequel est connecté au dispositif de déchiffrement de données (300) selon l'une quelconque des revendications 1 à 6, comprenant :

    une partie de réception de clé commune (480) qui est configurée de manière à recevoir une clé commune de masque randomisée laquelle est une clé commune qui inclut un élément de nombre aléatoire en provenance du dispositif de déchiffrement de données (300) ; dans lequel une partie de déchiffrement partiel de clé commune (320) du dispositif de déchiffrement de données (300) est configurée de manière à générer la clé commune de masque randomisée, en mettant en oeuvre un processus de déchiffrement d'une clé commune chiffrée qui est une clé commune chiffrée en utilisant une expression conditionnelle d'attribut incluant une valeur d'attribut, en utilisant une clé secrète randomisée qui est obtenue en incluant l'élément de nombre aléatoire dans une clé secrète d'utilisateur générée selon un schéma de chiffrement à base d'attributs utilisant la valeur d'attribut représentant un attribut ;

    une partie de suppression d'élément de nombre aléatoire (410) qui est configurée de manière à générer une clé commune de masque qui est obtenue en supprimant l'élément de nombre aléatoire de la clé commune de masque randomisée en utilisant une valeur de masque générée en utilisant un nombre aléatoire ; et

    une partie de transmission de clé commune (480) qui est configurée de manière à transmettre la clé commune de masque générée par la partie de suppression d'élément de nombre aléatoire.

11. Dispositif de suppression d'élément de nombre aléatoire selon la revendication 10, comprenant une partie de génération de clé secrète randomisée (420) qui est configurée de manière à générer une clé secrète randomisée obtenue en incluant, en utilisant le nombre aléatoire, l'élément de nombre aléatoire dans une clé secrète d'utilisateur générée selon un schéma de chiffrement à base d'attributs utilisant une valeur d'attribut représentant un attribut.

12. Dispositif de suppression d'élément de nombre aléatoire selon la revendication 10,
    dans lequel la partie de suppression d'élément de nombre aléatoire est configurée de manière à déterminer si la clé commune de masque randomisée correspond ou non à une valeur présentant un ordre, et si la clé commune de masque randomisée correspond à la valeur présentant l'ordre, à générer la clé commune de masque.

13. Dispositif de suppression d'élément de nombre aléatoire selon la revendication 10, lequel stocke une liste de rejet dans laquelle une valeur à rejeter est définie,
    dans lequel la partie de suppression d'élément de nombre aléatoire est configurée de manière à comparer la clé commune de masque randomisée avec la valeur définie dans la liste de rejet, et si la clé commune de masque randomisée est une valeur différant de la valeur définie dans la liste de rejet, à générer la clé commune de masque.

14. Dispositif de suppression d'élément de nombre aléatoire selon la revendication 10, lequel est configuré de manière à générer la clé commune de masque en supprimant l'élément de nombre aléatoire de la clé commune de masque randomisée en utilisant la valeur de masque et un groupe multiplicatif d'un champ fini qui peut être factorisé en un ordre q, un nombre entier 2 et un nombre premier h.

**15.** Dispositif de suppression d'élément de nombre aléatoire selon la revendication 10, lequel est configuré de manière à générer la clé commune de masque en supprimant l'élément de nombre aléatoire de la clé commune de masque randomisée en utilisant la valeur de masque et un groupe multiplicatif d'un champ fini qui peut être factorisé en un ordre q, un nombre entier 2 et un nombre composite h ;

dans lequel un produit de facteurs premiers qui sont inférieurs à un seuil de facteurs premiers, parmi une pluralité de facteurs premiers obtenue par une factorisation en nombres premiers du nombre composite h, est inférieur à l'ordre q.

**16.** Procédé de déchiffrement de données comprenant les étapes ci-dessous consistant à :

générer, par le biais d'une partie de déchiffrement partiel de clé commune (320), une clé commune de masque randomisée incluant un élément de nombre aléatoire, en mettant en oeuvre un processus de déchiffrement d'une clé commune chiffrée laquelle est une clé commune chiffrée utilisant une expression conditionnelle d'attribut incluant une valeur d'attribut, en utilisant une clé secrète randomisée qui est obtenue en incluant l'élément de nombre aléatoire dans une clé secrète d'utilisateur générée selon un schéma de chiffrement à base d'attributs utilisant la valeur d'attribut représentant un attribut ;

acquérir, par le biais d'une partie d'acquisition de clé commune de masque (330), une clé commune de masque qui est obtenue en supprimant l'élément de nombre aléatoire de la clé commune de masque randomisée générée par la partie de déchiffrement partiel de clé commune ;

générer la clé commune, par le biais d'une partie de suppression de masque (340), en utilisant la clé commune de masque acquise par la partie d'acquisition de clé commune de masque ; et

déchiffrer, par le biais d'une partie de déchiffrement de données (350), des données cibles qui ont été chiffrées en faisant appel à la clé commune, en utilisant la clé commune générée par la partie de suppression de masque.

**17.** Programme de déchiffrement de données qui amène un ordinateur à exécuter :

un processus de déchiffrement partiel de clé commune destiné à générer une clé commune de masque randomisée incluant un élément de nombre aléatoire, en mettant en oeuvre un processus de déchiffrement d'une clé commune chiffrée laquelle est une clé commune chiffrée utilisant une expression conditionnelle d'attribut incluant une valeur d'attribut, en utilisant une clé secrète randomisée qui est obtenue en incluant l'élément de nombre aléatoire dans une clé secrète d'utilisateur générée selon un schéma de chiffrement à base d'attributs utilisant la valeur d'attribut représentant un attribut ;

un processus d'acquisition de clé commune de masque destiné à acquérir une clé commune de masque qui est obtenue en supprimant l'élément de nombre aléatoire de la clé commune de masque randomisée générée par le processus de déchiffrement partiel de clé commune ;

un processus de suppression de masque destiné à générer la clé commune en utilisant la clé commune de masque acquise par le processus d'acquisition de clé commune de masque ; et

un processus de déchiffrement de données destiné à déchiffrer des données cibles qui ont été chiffrées en faisant appel à la clé commune, en utilisant la clé commune générée par le processus de suppression de masque.

# Fig.1

100 : ATTRIBUTE-BASED ENCRYPTION SYSTEM

190

FILE SERVER

101 : IN-HOUSE LAN

300:ACCESS
    TERMINAL

300

300

200:KEY GENERATION
SERVER

400:IC CARD

400

400

EP 2 947 640 B1

# Fig. 2

201:KEY LENGTH
202:ATTRIBUTE NUMBER

200

**KEY GENERATION SERVER**
**(RANDOMIZED SECRET KEY GENERATION DEVICE)**

290

210

| MASTER SECRET KEY
GENERATING PART |

211, 212

**SERVER STORAGE PART**

211

| MASTER SECRET KEY |

220

211, 212

| r-USER SECRET KEY
GENERATING PART |

292

212

| PUBLIC PARAMETER |

221, 222

230

291

| r-USER SECRET KEY
WRITING PART |

| USER ATTRIBUTE TABLE
(292:USER ATTRIBUTE
INFORMATION) |

212

280

| SERVER COMMUNICATION PART |

221:r-USER SECRET KEY
222:MASK VALUE

212:PUBLIC
PARAMETER

400

300

| IC CARD
(RANDOM NUMBER ELEMENT
REMOVING DEVICE) |

| ACCESS TERINAL
(DATA DECRYPTION DEVICE) |

# Fig. 3

301:TARGET DATA
302:ATTRIBUTE CONDITIONAL EXPRESSION

200 — KEY GENERATION SERVER

190 — FILE SERVER

212

311

300 — ACCESS TERMINAL

310 — DATA ENCRYPTING PART

380 — TERMINAL COMMUNICATION PART

212

311:ENCRYPTED DATA

212

311

390 — TERMINAL STORAGE PART

311 — ENCRYPTED DATA

ENCRYPTED DATA MAIN BODY — 312

ENCRYPTED KEM KEY — 313

212 — PUBLIC PARAMETER

313, 212

411

313

320 — KEM KEY PARTLY DECRYPTING PART

340 — MASK REMOVING PART

321:r-KEM KEY MASK VALUE

341:KEM KEY

330 — RANDOM NUMBER ELEMENT REMOVAL REQUESTNG PART

350 — DATA DECRYPTING PART

312: ENCRYPTED DATA MAIN BODY

321

411:KEM KEY MASK VALUE

IC CARD — 400

301:TARGET DATA

221:r-USER SECRET KEY

# Fig. 4

# Fig. 5

```
        ( SYSTEM PROCESS START )
                   │
                   ▼                              S100
  ┌────────────────────────────────────────────┐
  │      KEY GENERATION SERVER 200 GENERATES    │
  │           PUBLIC PARAMETER 212              │
  └────────────────────────────────────────────┘
                   │
                   ▼                              S200
  ┌────────────────────────────────────────────┐
  │ KEY GENERATION SERVER 200 WRITES r-USER SECRET KEY 221 AND │
  │          MASK VALUE 222 TO IC CARD 400      │
  └────────────────────────────────────────────┘
                   │
                   ▼                              S300
  ┌────────────────────────────────────────────┐
  │   ACCESS TERMINAL 300 ENCRYPTS TARGET DATA 301 │
  │           USING PUBLIC PARAMETER 212        │
  └────────────────────────────────────────────┘
                   │
                   ▼                              S400
  ┌────────────────────────────────────────────┐
  │      ACCESS TERMINAL 300 AND IC CARD 400    │
  │          DECRYPT ENCRYPTED DATA 311         │
  └────────────────────────────────────────────┘
                   │
                   ▼
              (   END   )
```

# Fig. 6

INITIAL SETTING PROCESS (S100) START

S110

MASTER SECRET KEY GENERATING PART 210 ACQUIRES
KEY LENGTH 201 AND ATTRIBUTE NUMBER 202

S120

MASTER SECRET KEY GENERATING PART 210
GENERATES PUBLIC PARAMETER 212
AND MASTER SECRET KEY 211 USING
KEY LENGTH 201 AND ATTRIBUTE NUMBER 202

S130

SERVER COMMUNICATION PART 280 TRANSMITS
PUBLIC PARAMETER 212 TO ACCESS TERMINAL 300

END

# Fig. 7

291:USER ATTRIBUTE TABLE

| USER ID | ATTRIBUTE | | | | |
|---------|-----------------|------------------|-----------------|-------------------|--------------|
|         | STATION NAME    | DEPARTMENT NAME  | SECTION NAME    | TITLE             | USER NAME    |
| User0001 | HEAD OFFICE     | A                | B               | SECTION MANAGER   | TANAKA       |
| : | : | : | : | : | : |

39

# Fig. 8

```
┌──────────────────────────────────────────────────────┐
│  r-USER SECRET KEY ISSUING PROCESS (S200) START      │
└──────────────────────────────────────────────────────┘
                          │
                          ▼                        S210
┌──────────────────────────────────────────────────────┐
│           r-USER SECRET KEY GENERATING PART 220       │
│        ACQUIRES USER ATTRIBUTE INFORMATION 292        │
│            FROM USER ATTRIBUTE TABLE 291              │
└──────────────────────────────────────────────────────┘
                          │
                          ▼                        S220
┌──────────────────────────────────────────────────────┐
│           r-USER SECRET KEY GENERATING PART 220       │
│           GENERATES r-USER SECRET KEY 221             │
│  AND MASK VALUE 222 USING USER ATTRIBUTE INFORMATION 292│
└──────────────────────────────────────────────────────┘
                          │
                          ▼                        S230
┌──────────────────────────────────────────────────────┐
│            r-USER SECRET KEY WRITING PART 230         │
│              WRITES r-USER SECRET KEY 221             │
│           AND MASK VALUE 222 TO IC CARD 400           │
└──────────────────────────────────────────────────────┘
                          │
                          ▼
                  ┌───────────────┐
                  │      END      │
                  └───────────────┘
```

# Fig. 9

r-USER SECRET KEY GENERATING PROCESS (S220) START

S221

r-USER SECRET KEY GENERATING PART 220 GENERATES
ATTRIBUTE SET Γ USING USER ATTRIBUTE INFORMATION 292

S222

r-USER SECRET KEY GENERATING PART 220 GENERATES
USER SECRET KEY sk__Γ USING ATTRIBUTE SET Γ

S223

r-USER SECRET KEY GENERATING PART 220 GENERATES
RANDOM NUMBER r

S224

r-USER SECRET KEY GENERATING PART 220 GENERATES
MASK VALUE mask USING RANDOM NUMBER r

S225

r-USER SECRET KEY GENERATING PART 220 GENERATES
r-USER SECRET KEY sk__Γ− USING
USER SECRET KEY sk__Γ AND RANDOM NUMBER r

END

# Fig.10

```
┌─────────────────────────────────────────────────────┐
│      DATA ENCRYPTING PROCESS (S300) START            │
└─────────────────────────────────────────────────────┘
                          │
                          ▼                      ⟋ S310
┌─────────────────────────────────────────────────────┐
│           DATA ENCRYPTING PART 310 ACQUIRES          │
│  TARGET DATA 301 AND ATTRIBUTE CONDITIONAL EXPRESSION 302 │
└─────────────────────────────────────────────────────┘
                          │
                          ▼                      ⟋ S320
┌─────────────────────────────────────────────────────┐
│        DATA ENCRYPTING PART 310 GENERATES KEM KEY 341 │
│  BASED ON KEY LENGTH 201 INCLUDED IN PUBLIC PARAMETER 212 │
└─────────────────────────────────────────────────────┘
                          │
                          ▼                      ⟋ S330
┌─────────────────────────────────────────────────────┐
│      DATA ENCRYPTING PART 310 ENCRYPTS TARGET DATA 301 │
│                 USING KEM KEY 341                     │
└─────────────────────────────────────────────────────┘
                          │
                          ▼                      ⟋ S340
┌─────────────────────────────────────────────────────┐
│       DATA ENCRYPTING PART 310 ENCRYPTS KEM KEY 341   │
│      USING ATTRIBUTE CONDITIONAL EXPRESSION 302       │
└─────────────────────────────────────────────────────┘
                          │
                          ▼                      ⟋ S350
┌─────────────────────────────────────────────────────┐
│    DATA ENCRYPTING PART 310 GENERATES ENCRYPTED DATA 311 │
│         INCLUDING ENCRYPTED DATA MAIN BODY 312        │
│              AND ENCRYPTED KEM KEY 313                │
└─────────────────────────────────────────────────────┘
                          │
                          ▼
                ┌─────────────────┐
                │       END       │
                └─────────────────┘
```

# Fig.11

```
┌─────────────────────────────────────────────────────┐
(  KEM KEY ENCRYPTING PROCESS (S340) START  )
└─────────────────────────────────────────────────────┘
                        │
                        ▼                    ┌ S341
┌─────────────────────────────────────────────────────┐
│  DATA ENCRYPTING PART 310 GENERATES ACCESS STRUCTURE S │
│     USING ATTRIBUTE CONDITIONAL EXPRESSION 302        │
└─────────────────────────────────────────────────────┘
                        │
                        ▼                    ┌ S342
┌─────────────────────────────────────────────────────┐
│    DATA ENCRYPTING PART 310 ENCRYPTS KEM KEY 341      │
│            USING ACCESS STRUCTURE S                   │
└─────────────────────────────────────────────────────┘
                        │
                        ▼
                  (    END    )
```

# Fig. 12

```
┌─────────────────────────────────────────────────────┐
│      DATA DECRYPTING PROCESS (S400) START            │
└─────────────────────────────────────────────────────┘
                          │
                          ▼                    S410
┌─────────────────────────────────────────────────────┐
│ TERMINAL COMMUNICATION PART 380 ACQURIES ENCRYPTED   │
│                  DATA 311                             │
└─────────────────────────────────────────────────────┘
                          │
                          ▼                    S420
┌─────────────────────────────────────────────────────┐
│      KEM KEY PARTLY DECRYPTING PART 320 ACQUIRES     │
│        r-USER SECRET KEY 221 FROM IC CARD 400        │
└─────────────────────────────────────────────────────┘
                          │
                          ▼                    S430
┌─────────────────────────────────────────────────────┐
│ KEM KEY PARTLY DECRYPTING PART 320 PERFORMS          │
│ DECRYPTING PROCESS FOR ENCRYPTED KEM KEY 313         │
│ INCLUDED IN ENCRYPTED DATA 311 USING r-USER          │
│ SECRET KEY 221                                       │
└─────────────────────────────────────────────────────┘
                          │
                          ▼                    S440
┌─────────────────────────────────────────────────────┐
│ RANDOM NUMBER ELEMENT REMOVAL REQUESTING PART 330    │
│ TRANSMITS r-KEM KEY MASK VALUE 321 OBTAINED BY       │
│ PERFORMING DECRYPTING PROCESS FOR ENCRYPTED KEM      │
│ KEY 313 TO IC CARD 400                               │
└─────────────────────────────────────────────────────┘
                          │
                          ▼                    S450
┌─────────────────────────────────────────────────────┐
│ ║      RANDOM NUMBER ELEMENT REMOVING PROCESS      ║ │
│ ║              BY IC CARD 400                       ║ │
└─────────────────────────────────────────────────────┘
                          │
                          ▼                    S460
┌─────────────────────────────────────────────────────┐
│ RANDOM NUMBER ELEMENT REMOVAL REQUESTING PART 330    │
│ RECEIVES KEM KEY MASK VALUE 411 FROM IC CARD 400     │
└─────────────────────────────────────────────────────┘
                          │
                          ▼                    S470
┌─────────────────────────────────────────────────────┐
│ MASK REMOVING PART 340 GENERATES KEM KEY 341         │
│ USING KEM KEY MASK VALUE 411 AND ENCRYPTED KEM       │
│ KEY 313                                              │
└─────────────────────────────────────────────────────┘
                          │
                          ▼                    S480
┌─────────────────────────────────────────────────────┐
│ DATA DECRYPTING PART 350 DECRYPTS ENCRYPTED DATA     │
│ MAIN BODY 312 INCLUDED IN ENCRYPTED DATA 311         │
│ USING KEM KEY 341                                    │
└─────────────────────────────────────────────────────┘
                          │
                          ▼
                  ┌───────────────┐
                  │      END      │
                  └───────────────┘
```

# Fig. 13

```
┌──────────────────────────────────────────────────────────────┐
│   RANDOM NUMBER ELEMENT REMOVING PROCESS (S450) START          │
└──────────────────────────────────────────────────────────────┘
                              │
                              ▼                    ⟋ S451
┌──────────────────────────────────────────────────────────────┐
│              CARD COMMUNICATION PART 480 RECEIVES              │
│      r-KEM KEY MASK VALUE 321 FROM ACCESS TERMINAL 300         │
└──────────────────────────────────────────────────────────────┘
                              │
                              ▼                    ⟋ S452
┌──────────────────────────────────────────────────────────────┐
│            RANDOM NUMBER ELEMENT REMOVING PART 410             │
│               GENERATES KEM KEY MASK VALUE 411                 │
│     USING r-KEM KEY MASK VALUE 321 AND MASK VALUE 222          │
└──────────────────────────────────────────────────────────────┘
                              │
                              ▼                    ⟋ S453
┌──────────────────────────────────────────────────────────────┐
│ CARD COMMUNICATION PART 480 TRANSMITS KEM KEY MASK VALUE 411   │
│                  TO ACCESS TERMINAL 300                        │
└──────────────────────────────────────────────────────────────┘
                              │
                              ▼
                    ┌──────────────────┐
                    │       END        │
                    └──────────────────┘
```

# Fig.14

# Fig.15

201:KEY LENGTH
202:ATTRIBUTE NUMBER

200

KEY GENERATION SERVER

210

MASTER SECRET KEY
GENERATING PART

211, 212

220B

USER SECRET KEY
GENERATING PART

211, 212

292

230B

USER SECRET KEY
WRITING PART

223, 222

290

SERVER STORAGE PART

211

MASTER SECRET KEY

212

PUBLIC PARAMETER

291

USER ATTRIBUTE TABLE
(292:USER ATTRIBUTE
INFORMATION)

212

280

SERVER COMMUNICATION PART

223:USER SECRET KEY

212:PUBLIC
PARAMETER

400

IC CARD

300

ACCESS TERMINAL

# Fig.16

# Fig.17

```
     ┌──────────────────────────────┐
     │     SYSTEM PROCESS START     │
     └──────────────────────────────┘
                    │
                    ▼                        S100
┌──────────────────────────────────────────────────────┐
│  KEY GENERATION SERVER 200 GENERATES PUBLIC PARAMETER 212  │
└──────────────────────────────────────────────────────┘
                    │
                    ▼                        S200B
┌──────────────────────────────────────────────────────┐
│     KEY GENERATION SERVER 200 WRITES USER SECRET KEY 223   │
│                  TO IC CARD 400                        │
└──────────────────────────────────────────────────────┘
                    │
                    ▼                        S300
┌──────────────────────────────────────────────────────┐
│     ACCESS TERMINAL 300 ENCRYPTS TARGET DATA 301      │
│              USING PUBLIC PARAMETER 212               │
└──────────────────────────────────────────────────────┘
                    │
                    ▼                        S400B
┌──────────────────────────────────────────────────────┐
│         ACCESS TERMINAL 300 AND IC CARD 400           │
│            DECRYPTS ENCRYPTED DATA 311                │
└──────────────────────────────────────────────────────┘
                    │
                    ▼
     ┌──────────────────────────────┐
     │            END               │
     └──────────────────────────────┘
```

# Fig. 18

```
┌─────────────────────────────────────────────────────────────┐
│   USER SECRET KEY ISSUING PROCESS (S200B) START              │
└─────────────────────────────────────────────────────────────┘
                            │
                            ▼                         ╭ S210B
┌─────────────────────────────────────────────────────────────┐
│           USER SECRET KEY GENERATING PART 220B ACQUIRES      │
│  USER ATTRIBUTE INFORMATION 292 FROM USER ATTRIBUTE TABLE 291 │
└─────────────────────────────────────────────────────────────┘
                            │
                            ▼                         ╭ S220B
┌─────────────────────────────────────────────────────────────┐
│           USER SECRET KEY GENERATING PART 220B GENERATES     │
│  USER SECRET KEY 223 USING USER ATTRIBUTE INFORMATION 292    │
└─────────────────────────────────────────────────────────────┘
                            │
                            ▼                         ╭ S230B
┌─────────────────────────────────────────────────────────────┐
│             USER SECRET KEY WRITING PART 230B WRITES         │
│             USER SECRET KEY 223 TO IC CARD 400               │
└─────────────────────────────────────────────────────────────┘
                            │
                            ▼
                ┌───────────────────┐
                │        END         │
                └───────────────────┘
```

# Fig. 19

```
┌─────────────────────────────────────────────────────────────┐
│   USER SECRET KEY GENERATING PROCESS (S220B) START           │
└─────────────────────────────────────────────────────────────┘
                            │
                            ▼                         ╭ S221B
┌─────────────────────────────────────────────────────────────┐
│  USER SECRET KEY GENERATING PART 220B GENERATES ATTRIBUTE SET Γ │
│            USING USER ATTRIBUTE INFORMATION 292              │
└─────────────────────────────────────────────────────────────┘
                            │
                            ▼                         ╭ S222B
┌─────────────────────────────────────────────────────────────┐
│           USER SECRET KEY GENERATING PART 220B GENERATES     │
│        USER SECRET KEY s k__Γ USING ATTRIBUTE SET Γ         │
└─────────────────────────────────────────────────────────────┘
                            │
                            ▼
                ┌───────────────────┐
                │        END         │
                └───────────────────┘
```

# Fig.20

DATA DECRYPTING PROCESS (S400B) START

S410

TERMINAL COMMUNICATION PART 380
ACQUIRES ENCRYPTED DATA 311

S420B

IC CARD 400 GENERATES r-USER SECRET KEY 221, AND
KEM KEY PARTLY DECRYPTING PART 320 ACQUIRES
r-USER SECRET KEY 221 FROM IC CARD 400

S430

KEM KEY PARTLY DECRYPTING PART 320 PERFORMS
DECRYPTING PROCESS FOR ENCRYPTED KEM KEY 313
INCLUDED IN ENCRYPTED DATA 311 USING r-USER SECRET KEY 221

S440

RANDOM NUMBER ELEMENT REMOVAL REQUESTING PART 330 TRANSMITS
r-KEM KEY MASK VALUE 321 OBTAINED BY PERFORMING
DECRYPTING PROCESS FOR ENCRYPTED KEM KEY 313, TO IC CARD 400

S450

RANDOM NUMBER ELEMENT REMOVING PROCESS BY IC CARD 400

S460

RANDOM NUMBER ELEMENT REMOVAL REQUESTING PART 330
RECEIVES KEM KEY MASK VALUE 411 FROM IC CARD 400

S470

MASK REMOVING PART 340 GENERATES KEM KEY 341 USING
KEM KEY MASK VALUE 411 AND ENCRYPTED KEM KEY 313

S480

DATA DECRYPTING PART 350 DECRYPTS ENCRYPTED DATA MAIN BODY 312
INCLUDED IN ENCRYPTED DATA 311 USING KEM KEY 341

END

# Fig.21

r-USER SECRET KEY ACQUIRING PROCESS (S420B) START

S421B

KEM KEY PARTLY DECRYPTING PART 320 REQUESTS
r-USER SECRET KEY $sk\_r$ FROM IC CARD 400

S422B

IC CARD 400 GENERATES RANDOM NUMBER $r$

S423B

IC CARD 400 GENERATES MASK VALUE $mask$ USING RANDOM NUMBER $r$

S424B

IC CARD 400 GENERATES r-USER SECRET KEY $sk\_r \sim$
USING USER SECRET KEY $sk\_r$ AND RANDOM NUMBER $r$

S425B

IC CARD 400 TRANSMITS r-USER SECRET KEY $sk\_r$
TO KEM KEY PARTLY DECRYPTING PART 320

S426B

KEM KEY PARTLY DECRYPTING PART 320
RECEIVES r-USER SECRET KEY $sk\_r$

END

# Fig.22

201:KEY LENGTH
202:ATTRIBUTE NUMBER

200

## KEY GENERATION SERVER

210

**MASTER SECRET KEY GENERATING PART**

211, 212

290

**SERVER STORAGE PART**

220

**r-USER SECRET KEY GENERATING PART**

211, 212, 292

221, 222

211

**MASTER SECRET KEY**

212

**PUBLIC PARAMETER**

291

**USER ATTRIBUTE TABLE (292:USER ATTRIBUTE INFORMATION)**

280

**SERVER COMMUNICATION PART**

212, 221, 222

221

**r-USER SECRET KEY**

222

**MASK VALUE**

212:PUBLIC PARAMETER
221:r-USER SECRET KEY
222:MASK VALUE

300

**ACCESS TERMINAL**

53

# Fig.23

301:TARGET DATA
302:ATTRIBUTE
CONDITIONAL EXPRESSION

200
KEY GENERATION SERVER

190
FILE SERVER

212, 221, 222

311

300
ACCESS TERMINAL

310
DATA ENCRYPTING PART

380
TERMINAL COMMUNICATION PART

212
311:ENCRYPTED DATA

390

212

311

TERMINAL STORAGE PART

311
ENCRYPTED DATA

ENCRYPTED DATA MAIN BODY

312

ENCRYPTED KEM KEY

313

212
PUBLIC PARAMETER

320
313, 212

411

313

340
MASK REMOVING PART

KEM KEY PARTLY DECRYPTING PART

321:r-KEM KEY MASK VALUE

312

360
RANDOM NUMBER ELEMENT REMOVING PART

350
DATA DECRYPTING PART

341:KEM KEY

222

221

301:TARGET DATA

# Fig.24

```
                    SYSTEM PROCESS START
```

                                                    S100
```
   KEY GENERATION SERVER 200 GENERATES PUBLIC PARAMETER 212
```

                                                    S200C
```
            KEY GENERATION SERVER 200 GENERATES
      r-USER SECRET KEY 221 AND MASK VALUE 222
```

                                                    S300
```
   ACCESS TERMINAL 300 ENCRYPTS TARGET DATA 301
              USING PUBLIC PARAMETER 212
```

                                                    S400C
```
   ACCESS TERMINAL 300 DECRYPTS ENCRYPTED DATA 311
      USING r-USER SECRET KEY 221 AND MASK VALUE 222
```

```
                            END
```

# Fig.25

```
( r-USER SECRET KEY GENERATING PROCESS (S200C) START )
```

S210

```
r-USER SECRET KEY GENERATING PART 220 ACQUIRES
USER ATTRIBUTE INFORMATION 292 FROM USER ATTRIBUTE TABLE 291
```

S220

```
r-USER SECRET KEY GENERATING PART 220 GENERATES
r-USER SECRET KEY 221 AND MASK VALUE 222
USING USER ATTRIBUTE INFORMATION 292
```

S230C

```
r-USER SECRET KEY GENERATING PART 220 STORES
r-USER SECRET KEY 221 AND MASK VALUE 222 IN
SERVER STORAGE PART 290
```

```
( END )
```

# Fig.26

```
( DATA DECRYPTING PROCESS (S400C) START )
```
↓ ⟋ S410

| TERMINAL COMMUNICATION PART 380 ACQUIRES<br>ENCRYPTED DATA 311 |

↓ ⟋ S420C

| KEM KEY PARTLY DECRYPTING PART 320 ACQUIRES<br>r-USER SECRET KEY 221 FROM KEY GENERATION SERVER 200 |

↓ ⟋ S430C

| KEM KEY PARTLY DECRYPTING PART 320 PERFORMS DECRYPTING PROCESS FOR<br>ENCRYPTED KEM KEY 313 INCLUDED IN<br>ENCRYPTED DATA 311 USING r-USER SECRET KEY 221<br>(AFTER DECRYPTING PROECESS, r-USER SECRET KEY 221 IS DELETED) |

↓ ⟋ S440C

| RANDOM NUMBER ELEMENT REMOVING PART 360 ACQUIRES<br>MASK VALUE 222 FROM KEY GENERATION SERVER 200 |

↓ ⟋ S450C

| RANDOM NUMBER ELEMENT REMOVING PART 360 REMOVES RANDOM NUMBER ELEMENT<br>FROM r-KEM KEY MASK VALUE 321 USING MASK VALUE 222<br>(AFTER REMOVING PROCESS, MASK VALUE 222 IS DELETED) |

↓ ⟋ S470

| MASK REMOVING PART 340 GENERATES KEM KEY 341<br>USING KEM KEY MASK VALUE 411 AND ENCRYPTED KEM KEY 313 |

↓ ⟋ S480

| DATA DECRYPTING PART 350 DECRYPTS ENCRYPTED DATA MAIN BODY 312<br>INCLUDED IN ENCRYPTED DATA 311 USING KEM KEY 341 |

↓

```
( END )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012300936 A1

### Non-patent literature cited in the description

- **B.WATERS.** Ciphertext-policy attribute-based encryption: an expressive, efficient, and provably secure realization. *PKC,* 2011
- **M.GREEN ; S.HOHENBERGER ; B.WATERS.** Outsourcing the Decryption of ABE Ciphertexts. *Proceedings of the 20th USENIX conference on Security,* 2011
- **JIN LI et al.** Secure Outsourced Attribute-based Encryption. *INTERNATIONAL ASSOCIATION FOR CRYPTOLOGIC RESEARCH,* 08 November 2012, vol. 20130331 (042334), 1-12